# EUROPÄISCHE PATENTSCHRIFT

(11) **EP 3 245 051 B1**
(45) Veröffentlichungstag und Bekanntmachung des Hinweises auf die Patenterteilung: **25.10.2023**
(21) Anmeldenummer: 16700565.1
(22) Anmeldetag: 13.01.2016
(51) Int. Cl.: B29D 11/00, B29C 45/14

(54) **VERFAHREN ZUR HERSTELLUNG EINES OPTISCHEN GIESSKÖRPERS MIT HOLOGRAFISCH OPTISCHEM ELEMENT UND OPTISCHER GIESSKÖRPER**
METHOD FOR PRODUCING AN OPTICAL CAST BODY WITH HOLOGRAPHIC OPTICAL ELEMENT AND OPTICAL CAST BODY
PROCÉDÉ DE FABRICATION D'UN CORPS COULÉ OPTIQUE AVEC ÉLÉMENT OPTIQUE HOLOGRAPHIQUE ET CORPS COULÉ OPTIQUE

(30) Priorität: 14.01.2015 EP 15151178
(43) Veröffentlichungstag der Anmeldung: 22.11.2017
(73) Patentinhaber: Covestro Deutschland AG, 51373 Leverkusen (DE)
(72) Erfinder: FÄCKE, Thomas, 51375 Leverkusen (DE); MALEIKA, Robert, 40589 Düsseldorf (DE); ORSELLI, Enrico, 50677 Köln (DE); STERN, Frank-Stefan, 51427 Bergisch Gladbach (DE)
(74) Vertreter: Levpat
(86) Internationale Anmeldenummer: PCT/EP2016/050539
(87) Internationale Veröffentlichungsnummer: WO 2016/113288

(56) Entgegenhaltungen:
- EP-A1- 2 626 185
- JP-A- H10 151 643
- JP-A- 2001 004 820
- JP-A- 2008 168 646
- JP-A- 2008 170 852
- JP-A- 2010 125 803
- US-A1- 2010 141 890

## Beschreibung

Die Erfindung betrifft ein Verfahren zur Herstellung eines optischen Gießkörpers umfassend wenigstens ein volumenholografisch optisches Element mittels eines Gießprozesses.

In der diffraktiven Optik unterscheidet man zwischen beugenden Strukturen die auf einer Oberfläche eingeprägt wurden und solchen die in der Tiefe der entsprechenden Struktur enthalten sind. Handelt es sich bei Letzterer um periodisch sich variierende Schichten unterschiedlichen Brechungsindexes, so spricht man von Phasenhologrammen. Derartige Strukturen erlauben eine sehr elegante Art der Veränderung einer Lichtwellenfront und weisen im Gegensatz zu diffraktiv wirkenden, geprägten Oberflächen verschiedenene Vorteile auf. So kann die Beugungseffizienz sehr hoch sein und durch die hohe Braggselektivität werden unerwünschte höhere Ordnungen effektiv unterdrückt. Weiterhin erlauben diese Optiken ein transparentes Erscheinungsbild, wenn die Braggbedingung (z.B. unter anderen Winkeln) nicht erfüllt ist. Somit lassen sich optischen Kombiner herstellen.

Diffraktive Optiken weisen genau wie refraktive Optiken chromatische Aberrationen auf, die es zu minimieren gilt. Da für refraktive Optiken kurzwelliges Licht stärker gebeugt wird als längerwelliges Licht und für diffraktive Optiken dies genau umgekehrt ist, können z.B. durch Hybridoptiken bestehend aus diffraktiven und refraktiven Baugruppen kompakte chromatische Aberrationskorrekturen realisiert werden. Weiterhin hat es Vorteile solche Hybridoptiken zu verwenden, wenn man in einem optischen Aufbau verschiedene, unabhängig von einander zu realisierende Optikfunktionen benötigt werden. Möchte man dies nur mit refraktiver Optik umsetzen, ist man gezwungen, Teile der optischen Apertur des System jeweils der einen oder der anderen optischen Funktion entsprechend zuzuweisen. In Hybridoptiken bestehen da größere Freiheiten, da die optischen Funktionen voneinander unabhängig realisiert werden können.

Phasenhologramme werden auch (volumen)-holografisch optische Elemente (kurz vHOE) genannt. Die Optikfunktion wird über die Geometrie der periodisch variierenden Schichten gebildet. Dies geschieht durch ein Interferenzbelichtungsverfahren. Mögliche optische Funktionen der Hologramme entsprechen den optische Funktionen von Lichtelementen wie Linsen, Spiegel, Umlenkspiegel, Filter, Streuscheiben, gerichteten Streuelementen, gerichtete holografische Diffusoren, Beugungselemente, Lichtleiter, Lichtlenker (waveguides), Ein- bzw. Auskoppelelementen, Projektionsscheiben und/oder Masken. Zudem können mehrere derartiger optischer Funktionen in einem solchen Hologramm kombiniert werden, z.B. so dass je nach Lichteinfall das Licht in eine andere Richtung abgebeugt wird. Phasenhologramme können in ein Aufzeichnungsmaterial durch das Interferenzbelichtungsverfahren einbelichtet werden. Gängige Materialien hierfür sind Photopolymere, Silberhalogenidfilme und Dichromatgelantinefilme.

Refraktive Optikbauteile von hoher Güte werden aus transparenten Materialien wie Glas und Kunststoff gefertigt. Erstere sind meist schwer, letztere sind leichter und können durch Gießverfahren und Spritzgußverfahren gefertigt werden.

In JP2008170852A (Sony) wird die Herstellung eines Kunststoffkörpers enthaltend ein vHOEs mittels eines Spritzgußverfahrens von einen thermoplastischen Kunststoffkörper gelehrt. Allerdings handelt es sich hier um ein Sicherheitshologramm und die optische Güte des Aufbaus ist ungenügend für optische Anwendungen.

US7826113B2 (Konica Minolta) lehrt die Verwendung von Laminationsverfahren und die Verwendung von Klebstoffschichten zur Verbindung von vHOEs mit refraktiven Strukturen. Derartige Verfahren erforden ein sequentielles Montieren mindestens zweier refraktiv wirkender Baukomponenten, was aufwändig ist, um die erforderliche optische Güte sicherzustellen. Weiterhin führt die Verwendung von Zwischenschichten wie Klebstoffen zu Grenzflächen, die die optische Güte sehr leicht nachteilig beeinflussen können. Zudem ist die Bereitstellung mehrerer Einzelkomponenten und die anschließende Montage kostenintensiv. Für die Verwendung als optisches Element für Brillen, für optischen Aufbauten in abbildender Optik, aber auch für hocheffiziente Licht- und Bildprojektionen in denen ein vHOE verwendet werden soll, benötigt man entsprechende optische Elemente mit hinreichend hoher Güte.

Weiterhin ist es von großer Bedeutung, dass die optische Funktion des refraktiv wirkenden Teils eines solchen optischen Artikels mit Hybridfunktion mit dem diffraktiven Teil (vHOE) optisch zueinander ausgerichtet sind.

Aufgabe der vorliegenden Erfindung ist es daher, ein Verfahren bereitzustellen, ein volumenholografisch optisches Element in einem transparenten, qualitativ hochwertigen Gießkörper präzise zu positionieren.

Die Aufgabe wird durch ein Verfahren zur Herstellung eines optischen Gießkörpers mittels eines Gießprozesses umfassend wenigstens ein holografisch optisches Element gelöst, wobei das Verfahren folgende Schritte umfasst:
- Bereitstellen einer Gießform, umfassend ein erstes Formteil mit einer ebenen, sphärischen, asphärischen oder freiförmigen ersten Oberfläche und ein zweites Formteil mit einer ebenen, sphärischen, asphärischen oder freiförmigen zweiten Oberfläche, wobei das erste Formteil mit dem zweiten Formteil unter Ausbildung der Gießform verbindbar ist,
- Bereitstellen wenigstens eines holografisch optischen Elements,
- Positionieren und Ausrichten des wenigstens einen holografisch optischen Elements an dem ersten Formteil oder/und an dem zweiten Formteil,
- Zusammenführung des ersten und des zweiten Formteils unter Ausbildung der Gießform,
- Einführen von Gießmaterial in einem oder mehreren Schritten, wobei das Gießmaterials eine Viskosität bei 25°C von kleiner 5.000 mPas besitzt,
- Aushärten des Gießmaterials,
- Entfernen des ausgehärtenden Gießmaterials umfassend das wenigstens eine holografisch optischen Element aus der Gießform, wobei das wenigstens eine holografisch optischen Element wenigstens teilweise vom Gießmaterial umgeben ist.

Mit dem erfindungsgemäßen Verfahren lassen sich auf vergleichsweise einfache Art optische Gießkörper hoher optischer Güte herstellen.

Zu Beginn des Verfahrens erfolgt das Bereitstellen einer Gießform, umfassend ein erstes Formteil mit einer ebenen, sphärischen, asphärischen oder freiförmigen ersten Oberfläche und ein zweites Formteil mit einer ebenen, sphärischen, asphärischen oder freiförmigen zweiten Oberfläche. Zur Ausbildung einer Gießform ist dabei das erste Formteil mit dem zweiten Formteil verbindbar. Weiterhin wird wenigstens ein holografisch optisches Element bereitgestellt, welches in den zu produzierenden optischen Gießkörper integriert wird.

Die Reihenfolge der einzelnen Verfahrensschritte zur Herstellung des optischen Gießkörpers nach Bereitstellung der Formteile und des wenigstens einen holografisch optischen Elements ist nicht streng festgelegt. Beispielsweise kann zuerst das wenigstens eine holografisch optische Element an dem ersten Formteil oder/und an dem zweiten Formteil positioniert und ausgerichtet werden und anschließend erfolgt die Zusammenführung des ersten und des zweiten Formteils unter Ausbildung der Gießform, woraufhin das Gießmaterial in die Gießform eingeführt und ausgehärtet wird.

Erfindungsgemäß ist ebenso möglich, zunächst die Formteile unter Ausbildung der Gießform zusammenzuführen und anschließend das wenigstens eine holografisch optische Element in der Gießform an dem ersten Formteil oder/und an dem zweiten Formteil zu positionieren und auszurichten. Hierzu kann das wenigstens eine holografisch optische Element beispielsweise durch eine geeignete, insbesondere schlitzförmige Öffnung in die Gießform eingebracht werden.

Eine weitere Variante des erfindungsgemäßen Verfahrens besteht darin, zunächst in einem ersten Gießschritt einen Teil des Gießmaterials in das erste und/oder das zweiten Formteil einzuführen, das Gießmaterial zumindest teilweise aushärten zu lassen und sodann auf der sich bildenden Oberfläche das wenigstens eine holografisch optische Element zu positionieren und auszurichten. Anschließend erfolgt die Zusammenführung des ersten und des zweiten Formteils unter Ausbildung der Gießform und in einem weiteren Gießschritt das Einführen des restlichen Gießmaterials mit anschließender vollständiger Aushärtung desselben.

Die Bauteile der Gießform umfassen erfindungsgemäß ein erstes Formteil mit einer ersten Oberfläche und ein zweites Formteil mit einer zweiten Oberfläche. Die Formteile können beispielsweise aus Glas gefertigt sein, wobei hier Gläser gemeint sind die aus typischerweise Boroxiden, Siliziumoxiden, Aluminiumoxid, Natriumoxid und Calciumoxid und deren Mischungen als Hauptkomponenten hergestellt werden. Weitere Inhaltstoffe können die Oxide des Eisens, Zirkons, Titans, Bleis, Bariums, Kupfers, Silbers, Kaliums und Magnesiums sein. Kleine Mengen von Bromiden, Chloriden und Fluriden sind ebenfalls verwendbar. Bevorzugt sind Borosilikat und Quarzglas.

Es ist vorteilhaft Gläser zu verwenden, die vor Verwendung getempert werden, so dass Spannungsrisse nicht entstehen. In einer weiteren bevorzugten Ausführungsform werden Gläser mit ähnlichen thermischen Ausdehnungskoeffizienten wie die des Giessmaterials genutzt. Es können auch Gläser mit geringem Ausdehnungskoeffizient verwendet werden, wie z.B. glaskeramische Materialien.

Insbesondere für (teil)-automatisierte Verfahren können die Formteile auch aus Metallen gefertigt werden, da diese eine höhere Robustheit besitzen.

Je nach gewünschter Form des zu produzierenden optischen Gießkörpers können verschiedene Formen verwendet werden. So ist es möglich, ebene Oberflächen aber auch sphärisch, asphärischen Oberflächen sowie Freiformflächen zu verwenden. Jeweils ist es möglich, konvexe oder konkave Oberflächen zu verwenden. Die Oberflächen können zudem auch prismatische oder zylindrische Geometrien aufweisen. Eine Kombination aus diesen Geometrien ist ebenfalls möglich. Die Radien können variiert werden, wobei diese typischerweise für Brillenanwendungen in Ihrer Brechkraft in Dioptrien angegeben werden. Dabei ist es möglich geschickte Kombinationen aus einer konvexen und einer konkaven Oberfläche zu verwenden, so dass ein ästhetisch geformter optischer Artikel entsteht wie er durch seine refraktive wirkende Form geeignet ist eine Fehlsichtigkeit (Ametropie) wie die Kurzsichtigkeit (Myopie), eine Weitsichtigkeit (Hyperopie) oder einer Stabsichtigkeit (Astigmatismus) zu korrigieren. Andere abweichende Oberflächenformen können ebenfalls verwendet werden. Vorteilhaft ist es dabei auch Formen zu berücksichtigen, die für eine z.B. eng und/oder ästhetisch an die Kopfform anliegende Brillengläser geeignet sind. Für optischen Elemente in der technischen Optik sind eher kompakte Baukörpergeometrien gewünscht, was ebenfalls durch die geeignete Formgebung der Oberflächen umsetzbar ist.

Die Oberflächen werden durch industrieübliche Verfahren veredelt, so dass eine hochpräzise Optikform entsteht. Üblich sind Fräs- , Schleif- und Polierverfahren sowie die Applikation von Antireflektions- und/oder Kratzfest-schichten. Die Oberflächen sind in der Regel somit hochglänzend.

Die beiden Formteile sind verbindbar, so dass eine Gießform mit einer Gießkavität bzw. ein inneres Gießvolumen entsteht. Dazu kann das erste und/oder das zweite Formteil ferner eine Manschette zur Verbindung des einen Formteils mit dem anderen Formteil umfassen. Typischerweise ist die Manschette aus Kunststoff gefertigt, um eine schnelle Montage zu ermöglichen. Hierzu können Polyvinylchlorid, Polyolefine wie Polypropylen, Polyethylen oder aber auch Polycycloolefine verwendet werden. Ebenfalls ist es möglich Kautschuke, wie z.B. Butylkautschuk oder EPDM, insbesondere in vulkanisierter Form, verwendet werden. Auch thermoplastische und vernetzte elastomerische Polyurethane, Silicone und Epoxyharze können verwendet werden.

Die Manschette ist hinischtlich ihrer Geometrie derart ausgebildet, dass die beiden Formteile dicht miteinander verbunden werden können. Spezielle Laschen und Falten eignen sich insbesondere für eine bündig schließende Anordung.

Erfindungsgemäß wird das wenigstens eine holografisch optische Element an dem ersten Formteil und/oder an dem zweiten Formteil positioniert und ausgerichtet. Im Einzelnen kann hierbei das wenigstens eine holografisch optische Element an der ersten Oberfläche des ersten Formteils bzw. an der zweiten Oberfläche des zweiten Formteils oder an der Manschette positioniert und ausgerichtet werden. Im Falle der Positionierung und Ausrichtung des wenigstens einen holografisch optischen Elements an der Manschette kann das wenigstens eine holografisch optische Element dort vor oder nach der Integration der Manschette in das jeweilige Formteil positioniert und ausgerichtet werden.. Es ist ebenfalls möglich, dass die Positionierung und Ausrichtung an der ersten Oberfläche des ersten Formteils und an der zweiten Oberfläche des zweiten Formteils erfolgt. Ferner kann die Positionierung und Ausrichtung an der Oberfläche eines Formteils und gleichzeitig an der Manschette desselben Formteils oder auch an der ersten Oberfläche des ersten Formteils, an der zweiten Oberfläche des zweiten Formteils und an der Manschette des ersten und/oder zweiten Formteils erfolgen.

Die Positionierung kann auf verschiedene Weisen an einem Formteil mit Manschette erfolgen: So ist es möglich, bei geschlossener Gießform das holografisch optische Element durch eine Öffnung in der Manschette einzuschieben, so dass die Positionierung und die Ausrichtung durch die Öffnungsgeometrie selbst erfolgt. Dabei ist die Lage der Öffnung entscheidend für die Positionierung, die Geometrie definiert die Ausrichtung. Es kann vorteilhaft sein, wenn die Manschette eine minimale Dicke besitzt, damit die Positionierung des holografisch optischen Elements präzise erfolgen kann. So ist es vorteilhaft, die Dicke der Manschette größer 0,5 mm, vorteilhaft größer 3 mm und besonders vorteilhaft größer 10 mm zu wählen.

Die Öffnung kann dabei in der Manschette liegen oder aber an der Grenzfläche zum ersten Formteil. Auch ist es möglich das holografisch optische Element am Formteil mithilfe der Manschette zu fixieren.

Es ist weiterhin möglich, dass die Positionierung an der Oberfläche eines der Formteile erfolgt. Vorteilhaft kann die Positionierung und Ausrichtung durch eine Folie erfolgen, die auf die erste Oberfläche des ersten Formteils oder auf die zweite Oberfläche des zweiten Formteils vorab laminiert, appliziert oder aufgezogen wurde. Die Folienapplikation kann auch durch ein Werkzeug erfolgen, das durch (Luft)-druck die Folie auf die Oberfläche anhaften lässt. Auch kann die Folie durch ein Thermoformverfahren auf die Oberfläche positioniert werden. Bei dem Thermoformverfahren wird die Folie durch einen Ofen (z.B. einen Konvektionsofen) oder eine Stahlungsquelle (IR, UV, VIS) aufgewärmt und leicht verformbar gemacht. Durch die Erwärmung wird die Folie besonders leicht und schnell erweicht und anschließend mit (Luft)-druck auf die Oberfläche appliziert. Weiterhin ist ein High-Pressure Formverfahren verwendbar, mithilfe dessen die Folie nach Erwärmung leicht unterhalb ihrer Erweichungstemperatur durch die Anwendung von besonders hohem Druck auf die Oberfläche platziert wird. Es ist besonders vorteilhaft die konvexe Seite der ersten Oberflächen für die Applikation der Folie zu verwenden.

Die Folie kann die erste bzw. zweite Oberfläche vollständig oder nur teilweise bedecken. Weiterhin kann die Folie die gleiche Größe haben wie das holografisch optische Element, oder aber auch größer oder kleiner sein. Besonders vorteilhaft ist es, wenn die Folie die Oberfläche des entsprechenden Formteils vollständig bedeckt und insbesondere diese Oberfläche konvex geformt ist. Auch ist es besonders vorteilhaft, wenn die Folie die Oberfläche des entspechenden Formteils vollständig bedeckt.

Die verwendete Folie besteht dabei nach einer weiteren vorteilhaften Ausgestaltung der Erfindung im Wesentlichen aus demselben Gießmaterial. Dies hat den Vorteil, dass eine sichtbare Grenzfläche zwischen Folie und Gießmaterial veschwindet. Mit "im Wesentlichen aus demselben Gießmaterial" sind Materialen gemeint, die die gleichen chemischen Bestandteile wie das Gießmaterial enthalten. Gehärtete Gießmaterialien zeigen ein hohes Modul, weswegen es vorteilhaft sein kann, die Aushärtung des Gießmaterials in der Folie nicht vollständig durchzuführen, um eine Umformung auf die Oberfläche noch möglich zu machen. Für einkomponentige (1K) Materialien gelingt dies z.B. durch eine gesteuerte Umsetzung zu einem Umsetzunggrad von 30-95%, besonders vorteilhaft von 50-90%. (Mit Umsetzungsgrad ist im Rahmen der vorliegenden Erfindung immer der durch spektroskopische Methoden bestimmbare prozentuale Umsetzungsgrad der reaktiven chemischen Gruppen gemeint. Geeignete Methoden zur Bestimmung des Umsetzungsgrad sind z.B. die Infrarot-, Raman-, Kernresonanzspektroskopie.) Für thermisch härtende 1K-System kann z.B. die Menge des Katalysator, die Härtungszeit der Folie oder die Initiatormenge reduziert werden. Bei strahlenhärtenden 1K-Systeme kann die Menge an Photoinitiator oder die Lichtdosis reduziert werden. Thermisch härtende 1K-Systeme können z.B. radikalisch polymerisierende Monomere enthalten, die mittel thermisch zerfallenden Radikalbildner wie Peroxide (z.B. Dialkylperoxide oder Hydroxyalkylperoxide oder chemisch verwandte Produkte) oder Diazoverbindungen (wie z.B. Diazaisobutyrolnitril "AIBN") polymerisiert werden. Bei strahlenhärtenden Systemen können ebenfalls radikalisch polymersierenden Monomere verwendet werden, die mit UV-Initiatoren (z.B: alpha-Hydoxy-Ketone) und UV-Licht polymerisiert werden. Als radikalisch polymersierenden Monomere eigenen sich acryloylfunktionelle Monomere. Auch Monomere die mittels der Thiol-en-Reaktion polymersieren sind verwendbar. Hier nutzt man aliphatische Thiole und läßt diese mit Acrylaten, Vinylsilane oder anderen Michaelakzeptoren reagieren. Für zweikomponentige Gießsysteme ist es möglich, nicht nur a) die Katalysatormengen, b) Initiatormengen zu reduzieren, c) die Härtungszeit zu reduzieren, sondern zusätzlich kann man auch d) das Mischungverhältnis leicht modifizieren oder zwei oder mehrere dieser Maßnahmen gleichzeitig durchführen. Dabei gelingt es nur eine reduzierte Vernetzungsdichte aufzubauen, sodass dies ein Verformen der Folie möglich macht. Bei 2K Systemen auf Basis von Poly- oder Diisocyanaten und Alkoholen/Thiolen (also sogenannnte Polyurethansystemen bzw. Thiopolyurethansysteme) können die Isocyanate im Überschuß verwendet werden. Dann erfolgt eine spätere Reaktion mit Umgebungswasser zum Harnstoff. Genauso kann auch im Isocyanatunterschuß gearbeitet werden, bei dem dann Isocyanat aus der Giesmasse in die Folie migriert und die Nachvernetzung möglich macht.

Die Positionierung des holografisch optischen Elements auf der Oberfläche eines Formteils kann auch mit einem als Fixiermittel fungierenden Materialtropfen erfolgen, wobei der Brechungsindex des Materialtropfens von dem des Gießmaterials nicht mehr als 0,01, bevorzugt 0,002 abweicht. Dabei ist es auch hier besonders vorteilhaft, wenn der Materialtropfen im Wesentlichen aus demselben Material besteht wie das Gießmaterial selbst. Dies gelingt insbesondere wenn ein Material verwendet wird, dass nur einen Umsetzunggrad 30-90%, vorteilhaft 50-90% besitzt. Hier gelten analoge Betrachtungen wie in dem Fall einer Folie zur Positionierung und Ausrichtung des holographich optischen Elements. Auch die chemisch verwendbaren Systeme sind die gleichen wie für den Fall einer Folie als Positionierungsmaterial (siehe oben).

Die Positionierung kann auch durch die Verwendung einer Folie realisiert werden, die eine weitere Funktion in den optischen Artikel einbringt. So ist es möglich Polarisatorfolien, Farbfolien, Designfolien, UV-Schutzfolien, photochrome Folien einzubringen. In diesen Fällen ist es möglich das holografisch optische Element auf diese Folie zu laminieren oder zu verkleben und anschließend an dem ersten Formteil oder/und an dem zweiten Formteil zu positionieren und auszurichten.

Die Positionierung kann ebenfalls in einem Zwei- oder Mehrschrittverfahren erfolgen, indem zunächst ein Teil der Gießform mit Gießmaterial gefüllt wird, wobei dieses teilgehärtet oder vollständig gehärtet wird. Anschließend wird das holografisch optische Element auf die entstandende Oberfläche positioniert. Im folgenden Schritt wird das verbleibende freie Volumen der Gießform erneut verfüllt und das Gießmaterial gehärtet. Es ist vorteilhaft, wenn die entstandene Oberfläche im Wesentlichen senkrecht zur optischen Achse des optischen Artikels sich befindet, so dass das holografisch optische Element dann ebenfalls senkrecht zu dieser sich befindet. Besonders vorteilhaft ist es, wenn die Teilverfüllung auf einer konkaven Oberfläche erfolgt.

In Abwandlung der vorstehenden Ausgestaltung kann zunächst das erste und/oder das zweite Formteil zumindest teilweise mit Gießmaterial gefüllt und das Gießmaterial anschließend zumindest teilweise ausgehärtet werden, wobei sodann das wenigstens eine holografisch optische Element auf der gebildeten Oberfläche des zumindest teilweise ausgehärteten Gießmaterials positioniert und ausgerichtet wird, wobei anschließend das erste und das zweite Formteil unter Ausbildung der Gießform zusammengeführt werden, sodann die Gießform vollständig mit Gießmaterial gefüllt wird und wobei daran anschließend das gesamte Gießmaterial ausgehärtet wird.

Die positionierten und ausgerichteten holografisch optischen Elemente haben bedingt durch ihre eigene optische Funktion einen optischen Bezug zur optischen Funktion des hergestellen optischen Gießkörpers.

In einer bevorzugten Ausführungsform hat der optische Gießkörper eine optische Achse, die z.B. im Falle eines Brillenglases auf das Auge des Nutzers gerichtet ist. Die Ausrichtung des holografisch optischen Elements, vorzugweise eines planen holografisch optischen Elements, kann somit in einem Winkel zu der optischen Achse des optischen Gießkörpers angegeben werden. Der Winkel zwischen dem Normalenvektor der Ebene des planaren holografisch optischen Elementes und der optischen Achse des Gießkörpers kann 0° bis 90°, vorzugsweise 0° bis 60° sein.

Ein holografisch optisches Element besitzt immer zwei eigene optische Vorzugsrichtungen, die bei der Belichtung durch die Einstrahlwinkel des Referenz- und Objektstrahls zur (vorzugsweisen planaren) Oberfläche des Aufzeichnungsmaterials vorgegeben werden. Diese beiden optischen Vorzugsrichtungen können frei von dem Normalenvektor zur Ebene des planaren optischen Elements gewählt werden. In einer besonders bevorzugten Ausführungsform ist eine dieser beiden Vorzugsrichtungen (also entweder des Objekt- oder des Referenzstrahls) kolinear mit der optischen Achses des optischen Gießkörpers ausgerichtet.

Das holografisch optische Element selbst besteht aus einer holografischen Aufzeichnungsschicht und wahlweise angrenzenden thermoplastischen Substraten. Verwendbare thermoplastische Substrate bestehen aus Polyethylenterephtalat und andere Polyester, Polycarbonat, amorphen Polyamiden, Cellulosetriacetat, Polymethylmethacrylat, Polyurethanen, Polycycloolefinen (COC), Polystyrol und Polyethylen bzw. Polypropylen.

Es ist auch möglich statt eines thermoplastischen Substrats duroplastische Substrate zu verwenden. Dort bietet es sich insbesondere an, die im Wesentlichen gleichen Materialien zu verwenden, wie für das verwendete Gießmaterial.

Als holografische Aufzeichnungsmaterialien eignen sich Silberhalogenidemulsionen und Dichromatgelatine. Insbesondere sind auch Photopolymere geeignet. Bevorzugt werden solche Photopolymere, die Binder, Schreibmonomere und ein Photoinitiatorsystem umfassen.

Als Binder können amorphe Thermoplaste wie z.B. Polyacrylate, Polymethylmethacrylate oder Copolymere von Methylmethacrylat, Methacrylsäure oder andere Alkylacrylate und Alkylmethacrylate sowie Acrylsäure, wie z.B. Polybutylacrylat, weiterhin Polyvinylacetat und Polyvinylburyrat seine partiell hydrolysierten Derivate wie Polyvinylalkohole sowie Copolymerisate mit Ethylene und/oder weiteren (Meth)acrylaten, Gelatine, Celluloseester und Celluloseether wie Methylcellulose, Celluloseacetobutyrat, Silikone, wie z.B. Polydimethylsilicon, Polyurethane, Polybutadiene und Polyisoprene, sowie Polyethylenoxide, Epoxyharze, insbesondere aliphatische Epoxyharze, Polyamide, Polycarbonate sowie die in US 4994347A und darin zitierten Systeme verwendet werden.

Die Binder können insbesondere vernetzt und besonders bevorzugt dreidimensional vernetzt sein.

Besonders bevorzugt ist auch, wenn die Binder Polyurethane umfassen oder daraus bestehen und ganz besonders bevorzugt ist, wenn die Binder dreidimensional vernetzte Polyurethane umfassen oder daraus bestehen.

Derartige vernetzte Polyurethan-Binder sind beispielsweise durch Umsetzung wenigstens einer Polyisocyanat-Komponente a) und wenigstens einer isocyanatreaktiven Komponente b) erhältlich.

Die Polyisocyanat-Komponente a) umfasst wenigstens eine organische Verbindung mit wenigstens zwei NCO-Gruppen. Bei diesen organischen Verbindungen kann es sich insbesondere um monomere Di- und Triisocyanate, Polyisocyanate und / oder NCO-funktionelle Prepolymere handeln. Die Polyisocyanat-Komponente a) kann auch Mischungen monomerer Di- und Triisocyanate, Polyisocyanate und / oder NCO-funktioneller Prepolymere enthalten oder daraus bestehen.

Als monomere Di- und Triisocyanate können alle dem Fachmann an sich gut bekannten Verbindungen oder deren Mischungen eingesetzt werden. Diese Verbindungen können aromatische, araliphatische, aliphatische oder cycloaliphatische Strukturen aufweisen. In untergeordneten Mengen können die monomeren Di- und Triisocyanate auch Monoisocyanate, d.h. organische Verbindungen mit einer NCO-Gruppe umfassen.

Geeignete Polyisocyanate sind Verbindungen mit Urethan-, Harnstoff-, Carbodiimid-, Acylharnstoff-, Amid-, Isocyanurat-, Allophanat-, Biuret-, Oxadiazintrion-, Uretdion- und/oder Iminooxadiazindionstrukturen, die aus den vorgenannten Di- oder Triisocyanaten erhältlich sind.

Besonders bevorzugt handelt es sich bei den Polyisocyanaten um oligomerisierte aliphatische und / oder cycloaliphatische Di- oder Triisocyanate, wobei insbesondere die oben stehenden aliphatischen und / oder cycloaliphatischen Di- oder Triisocyanate verwendet werden können.

Ganz besonders bevorzugt sind Polyisocyanate mit Isocyanurat-, Uretdion- und / oder Iminooxadiazindion-Strukturen sowie Biurete basierend auf HDI oder deren Mischungen.

Als isocyanatreaktive Verbindungen b1) können Alkohole, Amino oder MercaptoVerbindungen, bevorzugt Alkohole, verwendet werden. Dabei kann es sich insbesondere um Polyole handeln. Ganz besonders bevorzugt können als isocyanatreaktive Verbindung b1) Polyester-, Polyether-, Polycarbonat-, Poly(meth)acrylat- und/oder Polyurethan-Polyole verwendet werden.

Als Polyesterpolyole sind beispielsweise lineare Polyesterdiole oder verzweigte Polyesterpolyole geeignet, die in bekannter Weise durch Umsetzung von aliphatischen, cycloaliphatischen oder aromatischen Di- bzw. Polycarbonsäuren bzw. ihren Anhydriden mit mehrwertigen Alkoholen einer OH-Funktionalität ≥ 2 erhalten werden können. Beispiele für geeignete Di- bzw. Polycarbonsäuren sind mehrwertige Carbonsäuren wie Bernstein-, Adipin-, Kork-, Sebacin-, Decandicarbon-, Phthal-, Terephthal-, Isophthal- Tetrahydrophthal- oder Trimellithsäure sowie Säureanhydride wie Phthal-, Trimellith- oder Bernsteinsäureanhydrid oder deren beliebige Gemische untereinander. Die Polyesterpolyole können auch auf natürlichen Rohstoffen wie Rizinusöl basieren. Es ist ebenfalls möglich, dass die Polyesterpolyole auf Homo- oder Mischpolymerisaten von Lactonen basieren, die bevorzugt durch Anlagerung von Lactonen bzw. Lactongemischen wie Butyrolacton, ε-Caprolacton und / oder Methyl-ε-caprolacton an hydroxyfunktionelle Verbindungen wie mehrwertige Alkohole einer OH-Funktionalität ≥ 2 beispielsweise der nachstehend genannten Art erhalten werden können.

Geeignete Diole bzw. Mischungen umfassen die an sich im Rahmen der Polyestersegmente genannten mehrwertigen Alkohole einer OH-Funktionalität ≥ 2, bevorzugt Butandiol-1,4, Hexandiol-1,6 und / oder 3-Methylpentandiol. Auch Polyesterpolyole können zu Polycarbonatpolyolen umgearbeitet werden.

Daneben sind als Bestandteile der Polyol-Komponente b1) als polyfunktionelle, isocyanatreaktive Verbindungen auch niedermolekulare, d.h. mit Molekulargewichten ≤ 500 g/mol, kurzkettige, d.h. 2 bis 20 Kohlenstoffatome enthaltende aliphatische, araliphatische oder cycloaliphatische di-, tri- oder polyfunktionelle Alkohole geeignet.

Besonders bevorzugt ist, wenn die Polyolkomponente ein difunktioneller Polyether-, Polyester oder ein Polyether-polyester-block-copolyester oder ein Polyether-Polyester-Blockcopolymer mit primären OH-Funktionen ist.

Bevorzugt ist auch, wenn die isocyanatreaktiven Verbindungen b1) eine zahlenmittlere Molmasse von ≥ 200 und ≤ 10000 g/Mol, weiter bevorzugt ≥ 500 und ≤ 8000 g/Mol und ganz besonders bevorzugt ≥ 800 und ≤ 5000 g/Mol aufweisen. Die OH-Funktionalität der Polyole beträgt bevorzugt 1.5 bis 6.0, besonders bevorzugt 1.8 bis 4.0.

Die isocyanatreaktive Komponente kann insbesondere Verbindungen umfassen, die im Zahlenmittel wenigstens 1.5 und bevorzugt 2 bis 3 isocyanatreaktive Gruppen aufweisen.

Bei den Schreibmonomeren kann es sich um Verbindungen handeln, die photoinitiert polymersierbar sind. Dies sind kationisch und anionisch polymerisierbare sowie radikalisch polymerisierbare Verbindungen. Besonders bevorzugt sind radikalisch polymerisierbare Verbindungen. Beispiele für geeigenete Verbindungsklassen sind ungesättigte Verbindungen wie (Meth)-Acrylate, α,β-ungesättigte Carbonsäurederivate wie beispielsweise Maleinate, Fumarate, Maleimide, Acrylamide, weiterhin Vinylether, Propenylether, Allylether und Dicyclopentadienyl-Einheiten enthaltende Verbindungen sowie olefinisch ungesättigte Verbindungen wie z.B. Styrol, α-Methylstyrol, Vinyltoluol und / oder Olefine, umfasst oder daraus besteht. Weiterhin können auch Thio-En reaktive Verbindungen also z.B. Thiole und activierte Doppelbindungen radikalisch polymerisiert werden.

Besonders bevorzugt können auch Urethan-(meth)-acrylate als Schreibmonomere verwendet werden.

Ganz besonders bevorzugt ist, wenn die Schreibmonomere ein oder mehrere Urethan-(meth)-acrylate umfassen oder daraus bestehen.

Als Urethan-(meth)-acrylate werden vorliegend Verbindungen mit mindestens einer Acrylsäureestergruppe bzw. Methacrylsäuregruppe und mindestens eine Urethanbindung verstanden. Solche Verbindungen können beispielsweise durch Umsetzung eines Hydroxyfunktionellen (Meth)-acrylats mit einer Isocyanat-funktionellen Verbindung erhalten werden.

Beispiele hierfür verwendbarer Isocyanat-funktionelle Verbindungen sind Monoisocyanate sowie die unter a) genannten monomeren Diisocyanate, Triisocyanate und / oder Polyisocyanate. Beispiele geeigneter Monoisocyanate sind Phenylisocyanat, die isomeren Methylthiophenylisocyanate. Di-, Tri- oder Polyisocyanate sind oben genannt sowie Triphenylmethan-4,4',4"-triisocyanat und Tris(p-isocyanatophenyl)thiophosphat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind dabei aromatische Di-, Tri- oder Polyisocyanate.

Als hydroxyfunktionelle (Meth)-Acrylate für die Herstellung von Urethanacrylaten kommen beispielsweise Verbindungen wie 2-Hydroxyethyl(meth)-acrylat, Polyethylenoxid-mono-(meth)acrylate, Polypropylenoxidmono-(meth)-acrylate, Polyalkylenoxidmono(meth)-acrylate, Poly(ε-caprolacton)mono(meth)acrylate, wie z.B. Tone^{®} M100 (Dow, Schwalbach, DE), 2-Hydroxypropyl(meth)acrylat, 4-Hydroxybutyl(meth)acrylat, 3-Hydroxy-2,2-dimethylpropyl-(meth)acrylat, Hydroxypropyl(meth)acrylat, Acrylsäure-(2-hydroxy-3 - phenoxypropylester), die hydroxyfunktionellen Mono-, Di- oder Tetraacrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipentaerythrit oder deren technische Gemische. Bevorzugt sind 2-Hydroxyethylacrylat, Hydroxypropylacrylat, 4-Hydroxybutylacrylat und Poly(ε-caprolacton)mono-(meth)-acrylat.

Bevorzugt sind insbesondere Urethan-(meth)-acrylate erhältlich aus der Umsetzung von Tris(p-isocyanatophenyl)thiophosphat und / oder m-Methylthiophenylisocyanat mit alkoholfunktionellen Acrylaten wie Hydroxyethyl-(meth)-acrylat, Hydroxypropyl-(meth)-acrylat und / oder Hydroxybutyl(meth)acrylat.

Bevorzugt ist auch, wenn als Schreibmonomere Verbindungen eingesetzt werden, die zwei oder mehr radikalisch polymerisierbare Gruppen pro Molekül aufweisen (multifunktionelle Schreibmonomere). Diese können allein oder in Kombination mit Schreibmonomeren, die nur eine radikalisch polymerisierbare Gruppe pro Molekül aufweisen, eingesetzt werden.

Bevorzugt können die Schreibmonomere daher auch wenigstens ein mono- und / oder ein multifunktionelles (Meth)-acrylat-Schreibmonomer umfassen oder daraus bestehen. Besonders bevorzugt ist, wenn die Schreibmonomere wenigstens ein mono- und / oder ein multifunktionelles Urethan-(meth)-acrylat umfassen oder daraus bestehen. Ganz besonders bevorzugt ist, wenn die Schreibmonomere wenigstens ein monofunktionelles Urethan-(meth)-acrylat und wenigstens ein multifunktionelles Urethan-(meth)-acrylat umfassen oder daraus bestehen

Geeignete (Meth)-acrylat-Schreibmonomere sind insbesondere Verbindungen der allgemeinen Formel (I) 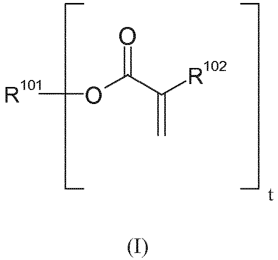 bei denen t>1 und t≤4 ist und R¹⁰¹ ein linearer, verzweigter, cyclischer oder heterocyclischer unsubstituierter oder gegebenenfalls auch mit Heteroatomen substituierter organischer Rest und/oder R¹⁰² Wasserstoff, ein linearer, verzweigter, cyclischer oder heterocyclischer unsubstituierter oder gegebenenfalls auch mit Heteroatomen substituierter organischer Rest ist. Besonders bevorzugt ist R¹⁰² Wasserstoff oder Methyl und/oder R¹⁰¹ ein linearer, verzweigter, cyclischer oder heterocyclischer unsubstituierter oder gegebenenfalls auch mit Heteroatomen substituierter organischer Rest.

Das Photoinitiatorsystem umfasst wenigstens einen Photoinitiator.

Photoinitiatoren sind vorliegend durch aktinische Strahlung aktivierbare Verbindungen, die eine Polymerisation der Schreibmonomere auslösen können. Bei den Photoinitiatoren kann zwischen unimolekularen (Typ I) und bimolekularen (Typ II) Initiatoren unterschieden werden. Des Weiteren werden sie je nach ihrer chemischen Natur in Photoinitiatoren für radikalische, anionische, kationische oder gemischte Art der Polymerisation unterschieden.

Im Sinne dieser Erfindung werden bevorzugt Typ II-Photoinitiatoren verwendet. Daher ist bei einer bevorzugten Ausführungsform vorgesehen, dass das Photoinitiatorsystem aus einem im sichtbaren spektralen Bereich absorbierenden Sensibilisator und einem Coinitiator besteht, wobei der Coinitiator bevorzugt ein Borat-Coinitiator sein kann.

Solche Photoinitiatoren sind prinzipiell in der EP 0 223 587 A beschriebenen und bestehen bevorzugt aus einer Mischung von einem oder mehreren Farbstoffen mit Ammonium-alleylarylborat(en).

Ganz besonders bevorzugt ist, wenn das Photoinitiatorsystem eine Kombination von Farbstoffen, deren Absorptionsspektren zumindest teilweise den Spektralbereich von 400 bis 800 nm abdecken, mit wenigstens einem auf die Farbstoffe abgestimmten Coinitiator umfasst. Gemäß einer weiteren bevorzugten Ausführungsform ist vorgesehen, dass die Photopolymerschicht Fluorurethane umfasst wobei diese bevorzugt Verbindungen gemäß der Formel (II) sein können 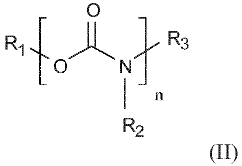 in der n≥1 und n≤8 ist und R₁, R₂, R₃ unabhängig voneinander Wasserstoff, lineare, verzweigte, cyclische oder heterocyclische unsubstituierte oder gegebenenfalls auch mit Heteroatomen substituierte organische Reste sind, wobei mindestens einer der Reste R₁, R₂, R₃ mit wenigstens einem Fluoratom substituiert ist und besonders bevorzugt R₁ ein organischer Rest mit mindestens einem Fluoratom ist.

Das holografisch optische Element kann eine plane, eine sphärische oder eine zylindrische Form aufweisen. Es ist auch möglich asphärische Formen zu verwenden. Auch Freiformen können verwendet werden.

Diese Formen können auf verschiedene Weise bereitgestellt werden. So können die holografischen Aufzeichnungsmaterialien durch einen Beschichtungsprozess wie z.B. Tauchlackierung, Sprühlackierung, Spincoating auf ein geformtes Substrat appliziert werden. Vorteilhaft ist bei diesen Methoden, dass die holografische Belichtung direkt mit diesen Geometrien erfolgen kann.

Für plane Substrate können Rakel, Schlitzgießerauftagsverfahren auf Foliensubstraten verwendet werden. Im nächsten Schritt kann dann die holografische Belichtung erfolgen und danach ein Verformverfahren genutzt werden, um geformte Folienkörper zu erhalten.

Geformte Folienkörper als holografisch optisches Element sind insbesondere dann wichtig, wenn möglichst kompakte Formen des mithilfe des erfindungsgemäßen Verfahrens hergestellten optischen Gießkörpers erhalten werden sollen. Da die Herstellung von planen, holografisch optischen Elementen zur Massenherstellung in einem Rolle-zu-Rolle Prozess gut umsetzbar ist, ist es bevorzugt, plane holografisch optische Elemente zu verwenden. Dabei kann das holografisch optische Element auch nur Teile der gesamten Fläche des optischen Gießkörpers ausfüllen, so dass es dann günstig ist, die Folie des holografischen Aufzeichnungsmaterials in seiner Projektionsfläche senkrecht zur optischen Achse und ggf. gleich groß wie die erste oder die zweite Oberflächen der Formteile zu wählen. Das plane holografisch optische Element füllt dann nur einen Teilbereich des holografischen Aufzeichnungsmaterials aus, der verbleibende Flächenbereich kann dann verformt werden.

Es ist auch möglich das holografisch optische Element in einer Form, z.B. in eine sphärische Form, in einer asphärische Form zu verwenden. Es ist besonders bevorzugt, die gleiche Form der ersten oder zweiten Oberfläche der Formteile zu verwenden. Das holografische Element kann dabei entweder vor der Verformung in das holografische Aufzeichnungsmaterial einbelichtet werden. Dabei ist es wichtig, die spätere Form bei der Belichtung zu berücksichtigen. Bei speziellen optischen Funktionen (wie z.B. bei einem optischen Notchfilter - also ein on axis Reflektionshologramm) kann auch die Verformung gewünscht sein, um die optische Funktion durch die Verformung gezielt anzupassen. In ausgewählten Fällen einer einachsigen Verformung bietet sich ein solches Verfahren besonders an.

Übliche Verformverfahren für diesen Zweck sind solche, die für die Substratwahl des holografischen Aufzeichnungsmaterials üblich sind. Folien können in Tiefziehverfahren, wie z.B. das Thermoformen oder das Hochdruckverformverfahren (HPF) durchgeführt werden.

Das holografisch optische Element kann auch Öffnungen bzw. Durchbrüche oder Schlitze enthalten, was insbesondere vorteilhaft ist, wenn die Folie des holografischen Aufzeichnungsverfahren die gesamte Fläche des optischen Artikels ausfüllt. Hierbei dienen die Öffnungen zum gleichmäßigen Verfüllen des inneren Volumens der Gießform durch das Gießmaterials, u.a. um den Materialfluß zu ermöglichen, oder zum Gasausgleich bei der vollständigen Füllung. Es ist bevorzugt, dass diese Öffnungen am äußeren Rand des holografisch optischen Elements liegen, da diese im späteren Verarbeitungsschritt wieder entfernt werden kann (z.B. durch einen Schneide- oder Schleifprozess, bei dem der entsprechende Bereich entfernt wird).

Weiterhin kann das holografisch optische Element in einen optischen Schichtaufbau integriert sein, wobei der Schichtaufbau derart gestaltet ist, dass Licht in den Schichtaufbau eingekoppelbar ist, entlang der Erstreckung der Schichten des Schichtaufbaus propagieren kann und über das wenigstens eine holografisch optische Element aus dem umgebenden optischen Gießkörper ausgestrahlt werden kann. Bevorzugt ist der optische Schichtaufbau derart gestaltet, dass Licht unter Totalreflektion entlang der lateralen Richtung des optischen holografisch Elements propagieren kann. Hierfür muß der Brechungsindex der äußeren Schichten des Schichtaufbaus umfassend das mindestens eine holografisch optische Element niedriger sein als der Brechungsindex der das holografisch optische Element enthaltenden Photopolymerschicht und ggf. einer separaten Lichtleiterschicht. Somit ist es speziell möglich, Licht oder Bildinformationen durch die Kante des holografisch optischen Elements einzuleiten und durch das holografisch optische Element gezielt auszukoppeln.

Vorteilhaft können auch Lichtleiter verwendet werden, auf denen sich das holografisch optische Element befindet. Derartige Strukturen weisen auch niedrigbrechende Außenschichten auf, um eine Totalreflektion zu ermöglichen. Es kann vorteilhaft sein, dass das holografisch optische Element eine plane Form hat. Auch keilförmige Geometrien sind möglich. Auch andere verjüngende Geometrien können verwendet werden. In einer besonders vorteilhaften Ausführungsform umfasst das holografisch optische Element einen Licht einkoppelnden Anteil, welcher aus dem inneren Volumen der Gießform herausragt, während ein auskoppelnder Funktionsanteil sich in der Gießform bzw. später im Gießkörper befindet. Beide holographisch optischen Elementanteile stehen über einen Lichtleiter in optischen Kontakt, während die angrenzenden Schichten besonders niedrigbrechend sind, um eine interne Totalreflektion von Licht im Lichtleiter, das durch den einkoppelnden Anteil des holografisch optischen Elements eingeleitet und durch den auskoppelnden Anteil des holografisch optischen Elements ausgeleitet wird, zu ermöglichen. In einer besonders bevorzugten Variante sind der einkoppelnde und der auskoppelnde Anteil des holografisch optischen Elements zwei separat belichtete Volumenhologramme, die sich in ein und demselben holographischen Aufzeichnungsmaterial befinden.

Das holografisch optische Element kann ein Reflektions-, Transmissions-, In-Line-, Off-Axis-, Full-Aperture Transfer-, Weißlicht-Transmissions-, Denisyuk-, Off-Axis Reflektions- oder Edge-Lit Hologramm sowie ein holographisches Stereogramm und bevorzugt ein Reflektions-, Transmissions- oder Edge-Lit Hologramm sein.

Mögliche optische Funktionen der Hologramme entsprechen den optische Funktionen von Lichtelementen wie Linsen, Spiegel, Umlenkspiegel, Filter, Streuscheiben, gerichteten Streuelementen, gerichtete holografische Diffusoren, Beugungselemente, Lichtleiter, Lichtlenker (waveguides), Ein- bzw. Auskoppelelementen, Projektionsscheiben und/oder Masken. Zudem können mehrere derartiger optischer Funktionen in einem solchen Hologramm kombiniert werden, z.B. so dass je nach Lichteinfall das Licht in eine andere Richtung abgebeugt wird. So kann man beispielweise mit derartigen Aufbauten autostereoskopische oder holografische elektronische Displays bauen. Weiter ist es möglich automobile Head-up Displays oder Head-mounted Displays zu realisieren. So ist es ebenfalls möglich die nach dem erfindungsgemäßen Verfahren hergestellten optischen Gießkörper in Korrektur- oder Sonnenbrillen und anderen Sehhilfen sowie Brillen zu verwenden.

Häufig zeigen die holografisch optischen Elemente eine spezifische Frequenzselektivität, je nachdem wie die Hologramme belichtet wurden und welche Dimensionen das Hologramm hat. Dies ist insbesondere wichtig, wenn man monochromatische Lichtquellen wie LED oder Laserlicht verwendet. So benötigt man ein Hologramm pro Komplementärfarbe (RGB), um Licht frequenzselektiv zu lenken und gleichzeitig vollfarbige (Head-Up)-Displays zu ermöglichen. Daher sind in bestimmten Displayaufbauten mehrere Hologramme ineinander in die Photopolymerschicht zu belichten.

Zudem können auch holographische Bilder oder Darstellungen von beispielsweise persönliche Portraits, biometrische Darstellungen in Sicherheitsdokumenten, oder allgemein von Bilder oder Bildstrukturen für Werbung, Sicherheitslabels, Markenschutz, Markenbranding, Etiketten, Designelementen, Dekorationen, Illustrationen, Sammelkarten, Bilder und dergleichen sowie Bilder, die digitale Daten repräsentieren können u.ä. oder auch Kombinationen des Vorstehenden in dem holografisch optischen Element in einen optischen Gießkörper integriert werden. Holographische Bilder können den Eindruck eines dreidimensionalen Bildes haben, sie können aber auch Bildsequenzen, kurze Filme oder eine Anzahl von verschiedenen Objekten darstellen, je nachdem aus welchem Winkel, mit welcher (auch bewegten) Lichtquelle etc. diese beleuchtet wird. Aufgrund dieser vielfältigen Designmöglichkeiten stellen die nach dem erfindungsgemäßen Verfahren hergestellten optischen Gießkörper eine sinnvolle technische Lösung für die oben genannten Anwendungen dar. Auch ist es möglich, derartige Hologramme zur Speicherung digitaler Daten zu verwenden, wobei verschiedenste Belichtungsverfahren (Shift-, Spatial- or Angular- Multiplexing) verwendet werden.

Die nach dem erfindungsgemäßen Verfahren hergestellten optischen Gießkörper können auch für optische Anzeigen auf Basis von Flüssigkristallen, organischen lichtemittierenden Dioden (OLED), LED-Displaytafeln, Microelektromechanische Systeme (MEMS) auf Basis von diffraktiver Lichtselektion, Electrowettingdisplays (E-ink) und Plasmabildschirmen verwendet werden. Derartige optische Anzeigen können autostereoskopische und/oder holographische Displays, transmittive und reflektive Projektionsleinwände oder Projektionsscheiben, Displays mit schaltbaren eingeschränkten Abstrahlverhalten für Privacyfilter und bidirektionalen Multiuserbildschirmen, virtuelle Bildschirme, Headup-Displays, Head-mounted Displays, Leuchtsymbole, Warnlampen, Signallampen, Scheinwerfer und Schautafeln sein.

Bei dem Gießmaterial handelt es sich um einkomponentige (1K) oder auch mehrkomponentige, z.B. zweikomponentige (2K) Gießsysteme.

Erfindungsgemäß hat das Gießmaterial zum Zeitpunkt des Einführens in die Gießkavität, d.h. das innere Volumen der Gießform, eine Viskosität von kleiner 5000 mPas bei 25°C. Vorteilhaft ist die Viskosität kleiner als 500 mPas und besonders bevorzugt kleiner als 100 mPas.

Das Gießmaterial umfasst eines oder mehrere Monomere und/oder Oligomern, die mindestens eine funktionelle Gruppe tragen. Diese funktionellen Gruppen können eines der folgenden sein: Acryl-, Methacryl-, Vinyl-, Allyl-, Isocyanat-, Isothiocyanat-, Alkohol, Säure, Oxiran, Thiiran, Thiol und Amin, besonders bevorzugt sind die isocyanat- und allylfunktionellen Gruppen, ganz besonders bevorzugt sind die isocyanatfunktionellen Gruppen.

Hierbei kann es sie z.B. um Gießsysteme auf Basis von Diethylenglycolbis(allylcarbonat) (CR39, Allyldiglycolcarbonate ADC) handeln, siehe auch in F. Strain, in "Encyclopedia of Chemical Processing and Design", 1st Ed., Dekker Inc. New York, Vol. 11, S. 432ff, die mittels Peroxiden thermisch härtbar sind. Weiterhin können auch Ethylacrylate, Methacrylat und Acrylate, Styrol, Vinylacetat, Acrylnitril und andere radikalisch polymersierbare Monomer mit ADC und ohne gemischt und polymersiert werden.

Auch Polyurethansysteme sind geeignet und bestehen aus einem isocyanatfunktionellem Teil und mit Isocyanaten reagierenden Komponenten.

Geeignete Isocyanate sind solche die auf aliphatischen Isocyanaten wie z.B. Hexamethylendiisocyanat (HDI), 3-Isocyanatomethyl-3,5,5-trimethylcyclohexylisocyanat (IPDI), 4,4'-Methylenbis(cyclohexylisocyanat) (H12MDI), Methyl-2,4-cyclohexandiisocyanat, Methyl-2,6-cyclohexyldiisocyanat, 1,3- oder 1,4-bis(isocyanatomethyl)cyclohexan (H6XDI), sowie Bis(isocyanatomethyl)norboman (NBDI), sowie aralkylisocyanate wie z.B. 1,3- oder 1,4-Xylylenendiisocyanat (XDI) und sowie Tetramethylxylylenedisocyanat (TMXDI) basieren. Dabei können sowohl die Monomeren Diisocyanate als auch deren Oligomere verwendet werden. Auch Mischungen verschiedener Diisocyanate und verschiedener Oligomeren untereinander oder miteinander sind möglich. Auch Mischoligomere, also solche die aus mehrenren verschiedenen Diisocyanaten bestehen sind verwendbar. Unter Oligomeren versteht man entsprechende Produkte die unter Urethan-, Harnstoff-, Carbodiimid-, Acylharnstoff-, Amid-, Isocyanurat-, Allophanat-, Biuret-, Oxadiazintrion-, Uretdion- und/oder Iminooxadiazindionstrukturbildung aus zwei oder mehreren Diisocyanaten hergestellt werden können. Ebenfalls ist es möglich sogenannte isocyanatfunktionelle Prepolymere herzustellen, indem man z.B. niedermolekulare Di-, Tri- oder Polyole auf Basis von Polyethern, Polyestern, Polycarbonaten mit Molekulargewichten unter Mw=5000, bevorzugt unter Mw=2000 mit zuvor genannten Diisocynanaten im Isocyanatüberschuß zur Reaktion bringt. Die mit den Isocyanaten reagierenden Komponenten sind Polyole wie z.B. Polyetherpolyole, Polyesterpolyole, Polycarbonatepolyole, Polyacrylatpolyole, Epoxypolyole, in der Natur vorkommende Fettsäure basierende Polyole, Siliconpolyole, fluorierte Polyole und Polyolefinepolyole. Auch diese können gemeinsam oder alleine verwendet werden.

Polyetherpolyole können Polypropylenpolyole, Polyethylenoxidpolyole, C-4 Etherpolyole (Poly-THF-polyole) sein, die in der Regel über katalystische Prozesse mittels eines niedermolekularen Alkohols oder Wasser/Hydoxidionen als Starter hergestellt werden.

Als mit Isocyanaten reagierende Komponente können auch (Di)-amine, wie z.B. die Jeffamine (Huntsman Int. LLC, Salt Lake City, UT, USA), Desmophen NH (Bayer MaterialScience AG, Leverkusen, Deutschland), aber auch aromatische Amine wie z.B. 2,4- und 2,6-Diamino-3,5-diethyltoluene (Ethacure 100 der Albemarle Corp, Baton Rouge, LA, USA) oder Dimethylthiotoulenediamine (Ethacure 300 der Albemarle Corp, Baton Rouge, LA, USA), sowie ein und mehrfach mit Methyl-, Ethyl und/oder Isopropyl- substituierte Methylendiphenylamine (Lonzacure, der Lonza Ltd., Basel Schweiz) verwendet werden.

Kommerziell verfügbare Polyurethangießmaterialien sind z.B. BAYTEC^{®} OCS 080D (Bayer MaterialScience LLC, Pittsburgh, PA, USA), Trivex (PPG, Pittsburgh, PA, USA).

Ebenfalls geeignet sind Thiopolyurethansysteme bei denen das mit Isocyanaten reagierenden Komponente Polythiole sind.

Auch ist es möglich Silizium-, Zinn-, Zirkon-Verbindungen zu verwendet, die mit bis zu vier Polythiolen komplexiert wurden (US2008/27198).

Gegebenenfalls kann das Gießsystem einen oder mehrere Katalysatoren enthalten. Dabei kann es sich insbesondere um Katalysatoren zur Beschleunigung der Isocyanatadditionsreaktion handeln. Geeignet sind Katalysatoren auf Basis von Zinn, Zink, Zirkon, Bismuth, Titan, sowie Amine. Beispiele hierfür sind Zinnoctoat, Zinkoktoat, Butylzinntrisoctoat, Dibutylzinndilaurat, Dimethylbis[(1-oxoncodecyl)oxy]stannan, Dimethylzinndicarboxylat, Zirkonium-bis(ethylhexanoat), Zirconium-acteylacetonat oder tertiäre Aminen wie beispielsweise 1,4-Diazabicyclo[2.2.2]octan, Diazabicyclononan, Diazabicycloundecan, 1,1,3,3-Tetramethylguanidin, 1,3,4,6,7,8-Hexahydro-1-methyl-2H-pyrimido(1,2-a)pyrimidin. Als Katalysator können auch anorganisches Zinn enthaltende Katalysatoren eingesetzt werden. Solche Katalysatoren können zyklische Zinnverbindungen sein, die von gesättigten oder ungesättigten, linearen oder verzweigten, aliphatische oder cycloaliphatische oder gegebenenfalls substituierte, aromatische oder arylaliphatische Reste, die gegebenenfalls Heteroatome aus der Reihe Sauerstoff, Schwefel, Stickstoff enthalten können, komplexiert werden, umfassen, wie zum Beispiel: 4,12-Dibutyl-2,6,10,14-tetramethyl-1,7,9,15-tetraoxa-4,12-diaza-8-stannaspirol[7.7]pentadecan, 4,12-Dibutyl-1,7,9,15-tetraoxa-4,12-diaza-8-stannaspirol[7.7]pentadecan, 4,12-Dimethyl-1,7,9,15-tetraoxa-4,12-diaza-8-stannaspirol[7.7]pentadecan, 2,4,6,10,12,14-Hexamethyl-1,7,9,15-tetraoxa-4,12-diaza-8-stannaspirol[7.7]pentadecan, und 2,2-Dichlor-6-methyl-1,3,6,2-dioxazastannocan. Auch ist es möglich Bismuth- und Zinksalze von Fettsäuren, wie z.B. Stearate, Neodecanoat und Versatate, Tetraalkyltitanate wie Tetraethyl- oder Tetrabutyltitanat zu verwenden.

Weiterhin können auch Additive wir Entformungsmittel, Weichmacher, Entschäumer, Verlaufsmittel, Brandschutzmittel, Thixotropiermittel, Verdicker, Antistaticmittel, Reaktionsinhibierer, Trocknungsmittel, Antioxidantien, UV Absorber, Stabilisatoren zugegeben werden.

Das Gießsystem kann aus seinen mehreren Komponenten bei Raumtemperatur gemischt werden. Dabei verwendet man ein NCO:OH Equivalenverhältnis von 1,5 bis 0,7, bevorzugt 1,3 bis 0,9. Die Mischung wird dann in die Gießform gegeben und dort über 0,5-48 Stunden, bevorzugt 1-24 Stunden auf bis zu 150°C, bevorzugt bis zu 130°C erwärmt. Die Erwärmung kann vorteilhafter Weise in Stufen erfolgen, so ist eine erster Erwärmung auf 40-100°C und Tempern bei diese Temperatur geeignet eine optimale Füllung zu erreichen. Später wird dann auf die maximale Temperatur erwärmt, um eine gute Durchhärtung zu erhalten. Es können auch mehr als zwei Temperaturhaltezeiten oder ein langsames kontinuierliche (z.B. lineares) Erwärmen verwendet werden. Nach dem Härten wird langsam, üblicherweise bei Raumtemperatur abgekühlt. Es kann auch ein Temperschritt mit einer Temperat urunterhalb der höchsten Härtungstemperatur gewählt werden. Ist die Form abgekühlt, können die Formteile der Gießform entfernt werden.

Die Gießform kann dabei manuell gefüllt werden oder auch durch automatisierte Verfahren wie. z.B. Reaction Injection Molding (RIM), Reaction Transfer Molding (RTF) gefüllt werden. Für letztere ist es dann auch möglich die Gießform aus anderen Materialien, bevorzugt aus Metallen (wie z.B. Edelstahl aber auch Eisen, Nickel, Kupfer, Aluminium, Chrom, Silber, Gold, oder deren Legierungen) zu fertigen. Weist wenigstens eine der beiden Formteile eine Manschette auf, so kann diese ebenfalls aus Metall gefertigt sein.

Zum Mischen können Rührwerkzeuge, Statikmischer, schnelle bewegende Gefäße und dergleichen verwendet werden. Es ist auch vorteilhaft das Gießsystem zu entgasen. Hierzu kann Vakuum angelegt werden und/oder über einen Fallfilm die Oberfläche vergrößert werden, die eine Blasenbildung vermeidet.

Ein optischer Gießkörper kann für diffraktiv wirkende optische transparente Bauteile und refraktiv und diffraktiv wirkende Hybridoptiken- und -linsen verwendet werden. Optische Elemente wie aspherische Linsen, integrierte Linsenssysteme und Module, diffraktive Optiken & Fresnellinsen, Off-axis Parabolspiegel, zylindrische Linsen, Gradientindexlinsen (GRISM), totale interne Reflektionslinsen (TIR), Prismen, Reflektive Optiken, Spiegel und Würfeloptiken, Linsenarrays und Mottenaugenoptiken, optische Combiner, Freiformoptiken, kollimierende Linsen, Gitterstrukturen können damit in ihrer optischen Leistung verbessert, kompakter gebaut oder mit weiteren optischen Funktionen erweitert werden. Die optische Funktion des nach dem erfindungsgemäßen Verfahren hergestellten optischen Gießkörpers mit holografisch Element kann sowohl zwei unabhängig voneinander nutzbare optische Funktionen (also eine refraktive sie durch die Gießform bestimmt wird und eine diffraktive, die durch das holografisch optische Element bestimmt wird) enthalten. Ebenfalls ist es auch möglich, dass beide Funktionen einander synergistisch verbinden. So ist es möglich, Abbildungsfehler des refraktiven Systems durch das diffraktive System zu kompensieren. Dies können monochromatische Fehler (sphärische Abberation, Astigmatismen, Koma, Bildfeldwölbung und Verzeichnungen), chromatische Abberationen (Farb-quer- und längs-fehler, Gaußfehler), Randlichtabfälle und Vignettierungen sein.

Weiterhin kann der optische Gießkörper für spezielle optische Funktionen verwendet werden, wobei auch Anwendungen ohne refraktive optische Funktion in Betracht kommen, d.h. des optischen Gießkörpers sind entsprechend der Ausbildung der ersten und zweiten Oberfläche der beiden Formteile plan. So können Strahlformer realisiert werden, wie z. B. Top Hat Strahlformer, Stable Top Strahlformer, Homogenisierer/Diffusoren, elliptische Diffusoren, Vortex-Linsen, Multispot-Elemente, Beam Sampler Elemente, Multifokus-Elemente, beugungsbegrenzte Fokussierungen, achromatische Korrekturen, Planlinsen, Korrekturen von Astigmatismus, chromatische Korrekturen für mehrere Wellenlängen.

Ein weiterer Aspekt der vorliegenden Erfindung betrifft ein Vervendung eines optischen Giesskörpers hergestellt nach einem Verfahren nach einem der Ansprüche 1 bis 13 in Brillen, wie z.B. Korrekturbrillen, Bifocal-, Trifokal- und Gleitsichtbrillen, Korrekturbrillen zur Bildschirmarbeit und zum Autofahren, Sonnenbrillen, Brillen mit Polarisationsfunktion, Schutzbrillen, Funktionsbrillen, Brillen mit eingebauter elektronischer Anzeige für augmented reality oder Datenbrillen, Automobilfrontscheinwerfer oder Rückleuchten, Mikroskope, Scheinwerfer, Taschenlampen, Fotoobjektive für Kameras und Smartphones, Projektionsoptiken in (elektronischen) Projektoren, Sekundäroptiken in lichtemittierenden Dioden und Lasern, LED-Lampen, Leuchten und Korrekturoptiken für elektronische Bildsensoren enthaltend einen optischen Gießkörper nach Anspruch 14.

Im folgenden wird die Erfindung anhand von Zeichnungen im Detail erläutert. Es zeigen:
- Figur 1a-c: drei verschiedene Gießformen mit unterschiedlichegestalteten Formteilen, wobei eines der Formteile eine Manschette umfasst,
- Figur 2a-g: ein Verfahren zur Herstellung eines optischen Gießkörpers mit einem holografisch optischen Element in einer ersten Ausgestaltung,
- Figur 3a-d: ein Verfahren zur Herstellung eines optischen Gießkörpers mit einem holografisch optischen Element in einer zweiten Ausgestaltung,
- Figur 4a-d: ein Verfahren zur Herstellung eines optischen Gießkörpers mit einem holografisch optischen Element in einer dritten Ausgestaltung,
- Figur 5a,b: eine Gießform mit einer durch entsprechend geformte Formteile gebildeten konkaven Oberfläche und einer konvexen Oberfläche und mit einem holografisch optischen Element mit planer Struktur sowie ein daraus erhältlicher optischer Gießkörper,
- Figur 6a, b: eine Gießform mit einer konkaven Oberfläche und einer konvexen Oberfläche und mit einem holografisch optischen Element mit planer Struktur und einem damit verbundenen weiteren Folienabschnitt sowie ein daraus erhältlicher optischer Gießkörper,
- Figur 7a, b: eine Gießform mit einer konkaven Oberfläche und einer konvexen Oberfläche und mit einem planaren holografisch optischen Element auf einem Träger mit gekröpfter Struktur sowie ein daraus erhältlicher optischer Artikel,
- Figur 8a,b: eine Gießform mit einer konkaven Oberfläche und einer konvexen Oberfläche und mit einem sphärisch geformten holografischen optischen Element sowie ein daraus erhältlicher optischer Gießkörper,
- Figur 9a,b: eine Gießform mit einer konkaven Oberfläche und einer konvexen Oberfläche und mit einem sphärisch geformten holografischen optischen Element sowie ein daraus erhältlicher optischer Artikel zur Korrektur einer Kurzsichtigkeit,
- Figur 10a,b: eine Gießform mit einer konkaven Oberfläche und einer konvexen Oberfläche und mit einem sphärisch geformten holografischen optischen Element sowie ein daraus erhältlicher optischer Gießkörper zur Korrektur einer Weitsichtigkeit,
- Figur 11a,b: eine Gießform mit einer konkaven Oberfläche und einer konvexen Oberfläche und mit einem holografisch optischen Element mit keilförmiger Struktur sowie ein daraus erhältlicher optischer Gießkörper,
- Figur 12a,b: eine Gießform mit einer konkaven Oberfläche und einer konvexen Oberfläche und mit einem Schichtaufbau enthaltend ein auf eine Lichtleiter positioniertes holografisch optisches Element sowie ein daraus erhältlicher optischer Gießkörper,
- Figur 13: einen optischen Gießkörper mit einem teilweise in den Gießkörper hineinragendem Schichtaufbau enthaltend zwei auf einem Lichtleiter positionierte holografisch optische Elemente,
- Figur 14a-c: eine Gießform mit einer konkaven Oberfläche und einer konvexen Oberfläche und einem unter einem Winkel zur optischen Achse des Gießkörpers ausgerichteten holografisch optischen Element sowie ein daraus erhältlicher optischer Gießkörper sowie ferner eine Funktionsdarstellung dieses optischen Gießkörpers,
- Figur 15a-g: ein Verfahren zur Herstellung eines optischen Gießkörpers mit einem holografisch optischen Element in einer vierten Ausgestaltung und
- Figur 16a-g: ein Verfahren zur Herstellung eines optischen Gießkörpers mit einem holografisch optischen Element in einer fünften Ausgestaltung

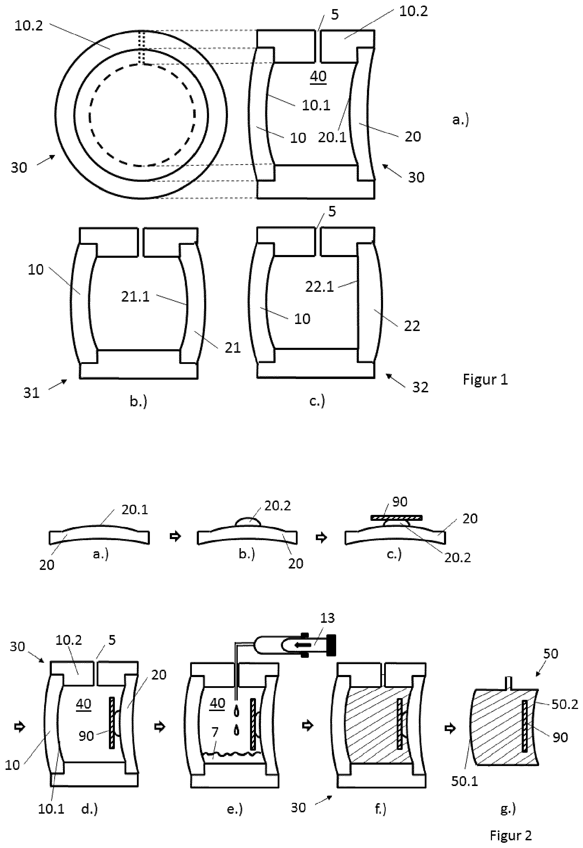

In Figur 1a ist eine aus einem ersten Formteil 10 und einem zweiten Formteil 20 gebildete Gießform 30 gezeigt. Diese umschließt eine Gießkavität 40. Das erste Formteil 10 umfasst eine der Gießkavität 40 zugewandte, vorliegend konkav ausgebildete erste Oberfläche 10.1 und eine aus einem Kunststoff, z.B. PVC oder Kautschuk, gefertigte Manschette 10.2. Das zweite Formteil 20 umfasst ebenfalls eine der Gießkavität 40 zugewandte konvexe Oberfläche, die hier als als zweite Oberfläche 20.1 bezeichnet wird. Über die Manschette 10.2 ist das erste Formteil 10 mit dem zweiten Formteil 20 dicht verbindbar. Beide Formteile 10, 20 können aus einem geeigneten metallischen Werkstoff oder auch aus Glas gefertigt sein.

Zur Einleitung des Gießmaterials weist die Manschette 10.2 eine Füllöffnung 5 auf. Zudem zeigt Fig. 1a eine Frontansicht der Gießform 30. Dementsprechend ist die Gießform 30 in dieser Blickrichtung sphärisch ausgebildet. Es versteht sich, dass auch andere Geometrien verwirklicht sein können, beispielsweise eine eliptische, rechteckige, quadratische, beliebig polygonale Form oder eine Freiform.

Im Unterschied zur Gießform 30 der Fig. 1a umfasst das zweite Formteil 21 der in Fig. 1b gezeigten Gießform 31 ebenfalls eine konkave zweite Oberfläche 21.1. Fig. 1c wiederum zeigt eine Gießform 32, bei der die zweite Oberfläche 22.1 des zweiten Formteils 22 eine plane Form aufweist.

In Figur 2 ist ein Verfahren zur Herstellung eines optischen Gießkörpers umfassend wenigstens ein holografisch optisches Element mittels eines Gießprozesses in einer ersten Ausführungsform dargestellt. Gemäß Schritt a) wird ein Formteil bereitgestellt, vorliegend das zweite Formteil 20 mit konvexer zweiter Oberfläche 20.1 der Fig. 1a. Anschließend wird das zweite Formteil 20 in Schritt b) mit einem Klebstofftropfen 20.2 belegt. In Schritt c) wird ein holografisch optisches Element 90 auf den Klebstofftropfen 20.2 positioniert und ausgerichtet. In Schritt d) wird nun das zweite Formteil 10 mit der Oberfläche 10.1, dem Klebstofftropfen 20.2 und dem holografisch optischen Element 90 mit der Manschette 10.2 des ersten Formteils 10 der Fig. 1a unter Ausbildung der Gießform 30 mit der Gießkavität 40verbunden. In Schritt e) erfolgt das Einführen des Gießmaterials 7 über die Füllöffnung 5 mittels des Dosiersystems 13. Als Gießmaterial können einkomponentige (1K) oder auch mehrkomponentige, z.B. zweikomponentige (2K) Gießsysteme zum Einsatz kommen, wobei das Gießmaterial zum Zeitpunkt des Einführens in die Gießkavität 40 eine Viskosität von kleiner 5000 mPas bei 25°C aufweist.

In Schritt f) wird das Gießmaterial ausgehärtet und anschließend wird die Gießform 30 abmontiert. Hierdurch wird ein optischer Gießkörper 50 erhalten, wie mit Schritt g) dargestellt. Dieser weist eine erste konvexe Oberfläche 50.1 und eine zweite konkave Oberfläche 50.2 auf und enthält in seinem inneren Volumen das holografisch optische Element 90.

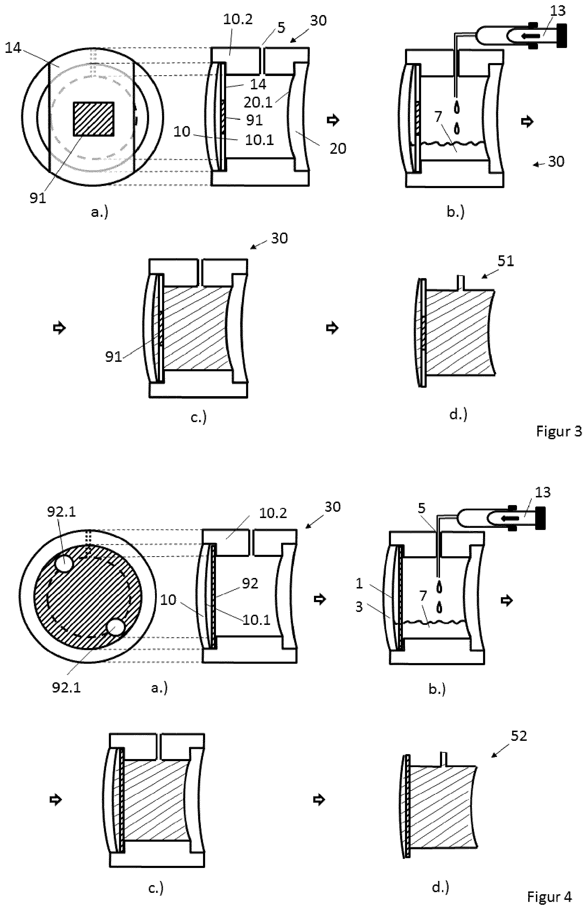

Figur 3 beschreibt eine weitere Ausführungsform des Verfahrens zur Herstellung eines optischen Gießkörpers umfassend wenigstens ein holografisch optisches Element mittels eines Gießprozesses. In Schritt a) wird eine Gießform 30 bereitgestellt, die durch ein erstes Formteil 10, welches seinerseits eine erste Oberfläche 10.1 und eine Manschette 10.2 mit Füllöffnung 5 für das Gießmaterial umfasst, und ein zweites Formteil 20 mit einer zweiten Oberfläche 20.1 gebildet wird. Innerhalb der Gießform 30 ist ein holografisch optisches Element 91 angeordnet, welches seinerseits Teil eines Folieabschnitts 14 ist, der zwischen der Oberfläche 10.1 und der Manschette 10.2 positioniert und ausgerichtet wird. Dabei ist dieser Folienabschnitt 14 derart rechteckig gestaltet, dass er in seinen vier Eckabschnitten zwischen der vorliegend wiederum sphärisch geformten Manschette 10.2 und erster Oberfläche 10.1 fixiert wird. Der Folienabschnitt 14 kann z.B. ein Abschnitt einer holografischen Aufzeichnungsfolie sein, der partiell belichtet wurde, so dass in seiner Mitte ein holografisch optisches Element 91 angeordnet ist. Der Folienabschnitt 14 kann zusätzlich auch noch weitere Folien und/oder Schutzlackschichten (nicht dargestellt) aufweisen, welche den Folienabschnitt 14 vor chemischem und oder mechanischem Einfluß schützen. In Schritt b) wird die Gießform 30 mit Gießmaterial 7 mittels Dosiersystem 13 vollständig befüllt, wobei das Gießmaterial den rechteckigen Folienabschnitt 14 zur vollständigen Füllung des Gießkörpers 30 seitlich umströmen kann, wie in der Querschnittsansicht des Schritts a) erkennbar ist. In Schritt c) wird das Gießmaterial ausgehärtet und in Schritt d) entformt, so dass der optische Gießkörper 51 erhalten wird.

Figur 4 beschreibt eine weitere Ausführungsform des Verfahrens zur Herstellung eines optischen Gießkörpers umfassend wenigstens ein holografisch optisches Element mittels eines Gießprozesses. Wie bei der im Zusammenhang mit Fig. 3 beschriebenen Verfahrensvariante, wird auch hier ein holografisch optisches Element 92 zwischen der Oberfläche 10.1 und der Manschette 10.2 des ersten Formteiles 10 fixiert und somit innerhalb der Gießform 30 positioniert und ausgerichtet. Wie erkennbar, wird wiederum eine Gießform mit einem holografisch optischen Element 92 bereitgestellt (Schritt a)), wobei hier das holografisch optische Element plan und konzentrisch mit der ersten Oberfläche 10.1 und der Manschette 10.2 des ersten Formteils 10 gestaltet ist, so dass es mit einem Umfangsabschnitt zwischen Manschette 10.2 und erster Oberfläche 10.1 fixiert wird und die erste Oberfläche 10.1 vollständig überdeckt. Dementsprechend sind in dem holografisch optischen Element 92 zwei Öffnungen 92.1 vorgesehen, die ein Einströmen des Gießmaterials 7 (Schritt b)) auch in den Volumenabschnitt zwischen holografisch optischem Element 92 und der ersten Oberfläche 10.1 und damit vollständiges Verfüllen des Gießkörpers 30 erlauben. In Schritt b) wird nun mittels des Dosiersystems 13 das Gießmaterial 7 durch die Füllöffnung 5 in das innere Volumen der Gießform 30 eingebracht, wobei, wie erwähnt, die Öffnungen 92.1 in dem holografisch optischen Element 92 dazu dienen, ein vollständiges Verfüllen der Gießform 30 zu ermöglichen. In Schritt c) wird nun das Aushärten des Gießmaterials 7 durchgeführt und in Schritt d) wird die Gießform entfernt, so dass ein optischer Gießkörper 52 erhalten wird.

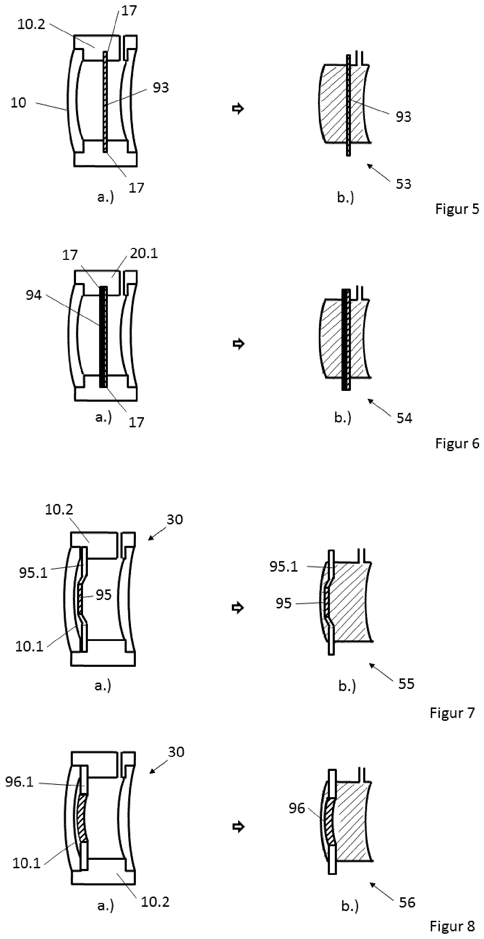

Die folgenden Figuren 5 bis 14 zeigen weitere Gießformen mit einem dort positionierten und ausgerichteten holografisch optischen Element sowie die daraus erhältlichen optischen Gießkörper.

Figur 5 zeigt die Positionierung und Ausrichtung des holografisch optischen Elements 93 durch vorbereitete Nuten 17 in der Manschette 10.2 des ersten Formteils 10. Die Nuten 17 können als eine entlang der gesamten Innenumfangsfläche der Manschette 10.2 zusammenhängend verlaufende Nut vorliegen, wenn ein holografisch optisches Element entsprechend der Ausgestaltung der Fig. 4 verwendet wird oder aber auch nur Teilbereiche der Manschette 4 umfassen, wenn nur teilflächige holografisch optische Elemente verwendet werden (siehe z.B. Figur 3, Schritt a, Frontansicht). Diese Ausführungsform eignet sich insbesondere, wenn auf beiden flächigen Außenseiten des optischen Gießkörpers 53 anschließend noch durch Schleifverfahren nachbearbeitet werden sollen und somit ein größerer Abstand der Außenseiten zum holografisch optischen Element 93 benötigt werden.

Figur 6 zeigt analog zu Figur 5 die Positionierung und Ausrichtung eines holografisch optischen Elements 94 in vorbereiteten Nuten 17 in der Manschette 20.1. Das holografisch optische Element 94 ist ein Mehrschichtaufbau, der weitere Schutzfolien und Funktionsfolien enthält. Beispielsweise kann es sich bei diesen Schutzfolien und Funktionsfolien um Polarisatorfolien, Farbfolien, Designfolien, UV-Schutzfolien, photochrome Folien oder auch Kombinationen daraus handeln.

Figur 7 zeigt einen Gießkörper 55 sowie eine Gießform 30 mit einem planen holografisch optischen Element 95, das auf einen beispielsweise durch Thermoformen oder durch ein Hochdruckverformverfahren (HPF) vorgeformten Folienabschnitt 95.1 mit durch die vorstehende Verformung gekröpfter Struktur aufgebracht wurde. Der Folienabschnitt 95.1 wird wiederum zwischen der Manschette 10.2 und der ersten Oberfläche 10.1 positioniert und ausgerichtet.

Figur 8 zeigt einen Gießkörper 56 sowie eine Gießform 30 mit einem ein sphärisch gewölbten holografisch optischen Element 96, das auf einen ebenfalls sphärisch gewölbt vorgeformten Folienabschnitt 96.1 flächig aufgebracht oder durch ein Thermoform bzw. HPF-Verfahren verformt wird. Der Folienabschnitt 96.1 seinerseits wird wiederum zwischen der Manschette 10.2 und der ersten Oberfläche 10.1 positioniert und ausgerichtet.

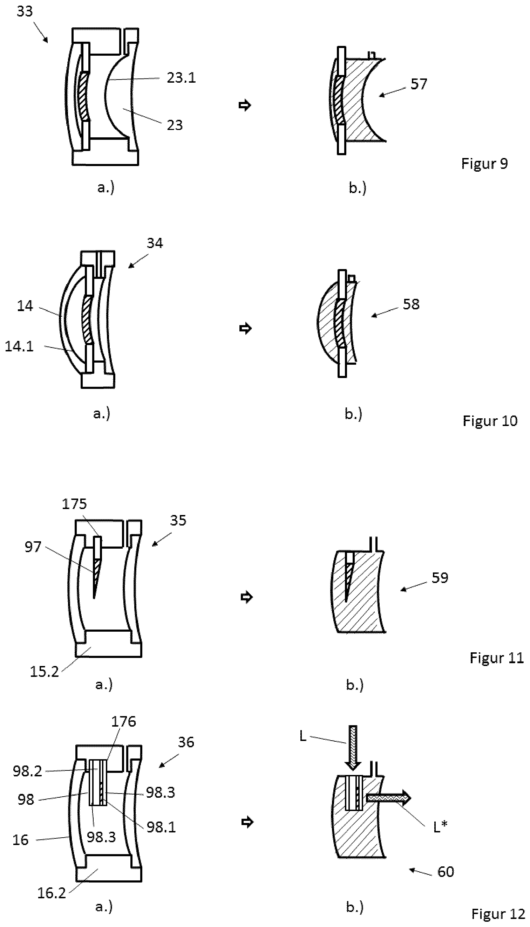

Figur 9a unterscheidet sich von Fig. 8a dadurch, dass hier die zweite Oberfläche 23.1 des zweiten Formteils 23 der Gießform 33 stärker konvex ausgebildet ist, so dass sich der durch den Gießprozess erhältliche Gießkörper 57 (Fig. 9b) in seiner refraktiven optischen Eigenschaft zur Korrektur einer Kurzsichtigkeit eignet.

Demgegenüber ist die erste Oberfläche 14.1 des Formteils 14 der Gießform 34 der Fig. 10a derart konkav geformt, dass der durch den Gießprozess erhältliche optische Gießkörper 58 in seiner refraktiven optischen Eigenschaft sich zur Korrektur einer Weitsichtigkeit eignet.

Figur 11a zeigt eine Gießform 35, bei der die Positionierung und Ausrichtung eines keilförmigen holografisch optischen Elements 97 in einer Nut 175 in der Manschette 15.2 erfolgt. Das holografisch optische Element 97 kann auch ein Mehrschichtaufbau sein, der ein keilförmiges Substrat und ein planes holografisch optisches Element umfasst. Fig. 11b zeigt den entsprechenden Gießkörper 59.

Figur 12a zeigt eine Gießform 36, bei der die Positionierung und Ausrichtung eines holografisch optischen Elements 98 in einer Nut 176 in der Manschette 16.2 des ersten Formteils 16 erfolgt. Das holografisch optische Element 98 umfasst einen Mehrschichtaufbau, der seinerseits ein holografisch optisches Schichtelement 98.1, einen Lichtleiter 98.2 und zwei niedrigbrechende Schichten 98.3 umfasst. Letztere ermöglichen die Lichtleitung mittels Totalreflektion in dem holografisch optischen Element 98.1 und dem Lichtleiter 98.2. Diese Ausführungsform eignet sich insbesondere für Head-up displays, die ein Bild projizieren und dazu einen Lichtleiter verwenden. Dafür benötigt wird ein gutes Einkoppeln des Lichtes an der Kante des Lichtleiter, wie in Fig. 12b dargestellt (Pfeil L). Durch einen Schleifprozess kann z.B. die notwendige optische Güte der Kante des Lichtleiters erreicht werden. Das holografisch optische Schichtelement 98 dient dann dem Auskoppln des Lichtes (Pfeil L*). Fig. 12b zeigt den entsprechenden Gießkörper 60 mit der Ein- und Auskoppelrichtung des Lichts L, L*.

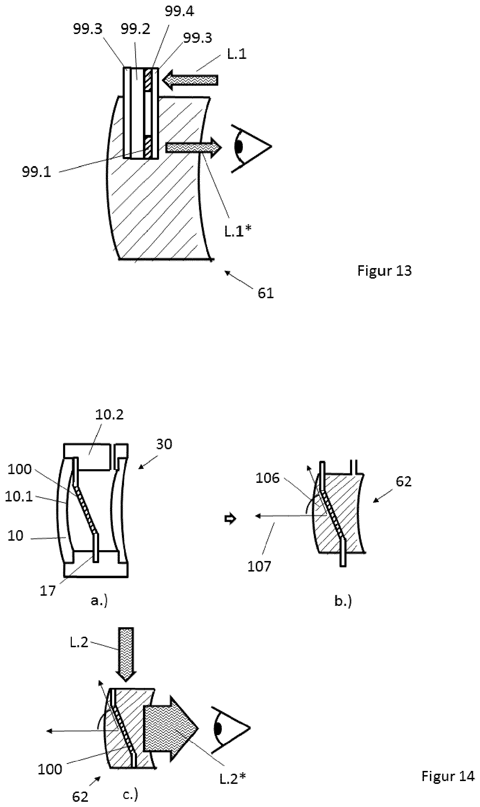

Figur 13 zeigt eine weitere bevorzugte Ausführungsform eines Gießkörpers 61, bei welchem, wie in Figur 12b, ein Lichtleiter 99.2 genutzt wird, um Licht L.1^{∗} mittels des holografisch optischen Schichtelements 99.1 auszukoppeln. Hier wird auch ein weiteres holographisch optisches Schichtelement 99.4 zum Einkoppeln des Lichts L.1 in den Lichtleiter 99.2 verwendet. Das Licht L. 1 wird dabei derart auf das einkoppelnde holografisch optische Element 99.4 projiziert, dass die niedrigbrechenden Schichten 99.3 dieses im Wesentlichen passieren lassen. Es ist bevorzugt, dass das Licht L.1 senkrecht bis zu +/- 40° von der Lotrichtung abweichend auf das einkoppelnde holografisch optische Element 99.4 bzgl. seiner Fläche projiziert wird. Besonders bevorzugt ist eine Richtung die von +20° bis -20° einstrahlt. Das eingekoppelte Licht L.1 propagiert nun in dem Lichtleiter 99.2 und dem holografischen Aufzeichnungsmaterial und wird unter Totalreflektion an den beiden niedrigbrechenden Schichten 99.3 reflektiert bis es am holografisch optischen Element 99.1 ausgekoppelt wird (Pfeil L.1^{∗}). Der Auskopplungswinkel wird durch die diffraktive optische Funktion des optischen Elements 99.1 bestimmt und ist bevorzugt +/- 40° zur Normalen ausgerichtet. In Fig 13 ist dieses Licht als Pfeil L.1^{∗} bezeichnet und weist dort einen Auskopplungswinkel von 0° auf, der dem Lot entspricht.

Fig 14a und 14b zeigen eine weitere Ausführungsform einer Gießform 30 und eines dazugehörigen optischen Gießkörpers 62, in dem ein - hier wiederum planar ausgebildetes - holografisch optisches Element 100 in einem Winkel 106 zu der optischen Achse 107 des refraktiv wirkenden optischen Artikels 62 angeordnet ist. Dabei wird das holografisch optische Element 100 zwischen erster Oberfläche 10.1 und Manschette 10.2 des ersten Formteils 10 auf der einen Seite und Nut 17 in Manschette 10.2 positioniert und ausgerichtet. Der Winkel zwischen der optischen Achse 107 und der Ebene des holografisch optischen Elements 100 wird dabei zudem durch die Form des holografisch optischen Elements 100 bestimmt.

Fig. 14c zeigt die grundlegende Funktion des optischen Gießkörpers 62 mit dem holografisch optischen Element100. Hier wird Licht L.2 in den optischen Gießkörper eingestrahlt und von der holografischen Struktur in dem holografisch optischen Element 100 gebeugt, so dass es als Lichtstrahl L.2* aus dem optischen Gießkörper 62 wieder ausgekoppelt wird.

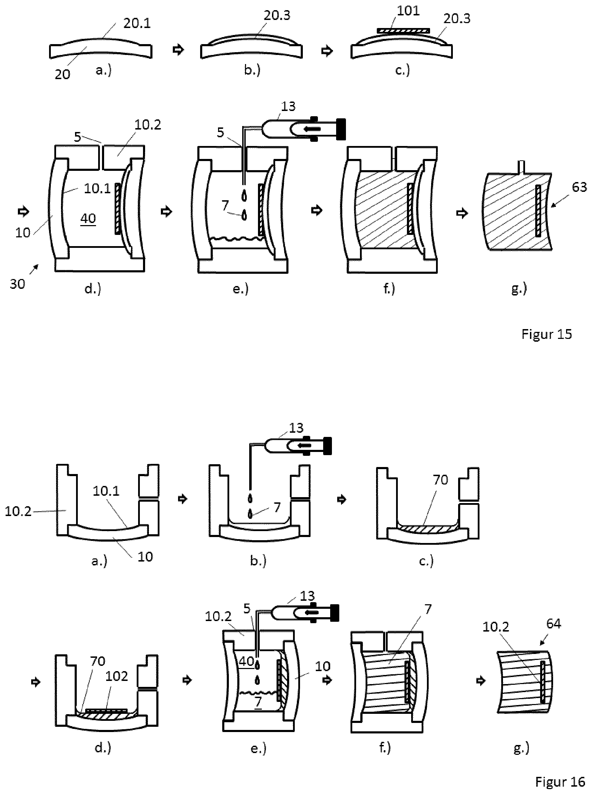

Figur 15 beschreibt eine weitere Aus führungs form des Verfahrens zur Herstellung eines optischen Gießkörpers 63 umfassend wenigstens ein volumenholografisch optisches Element mittels einer Gießform 30 und eines Gießprozesses. Bei dieser Ausgestaltung des Verfahrens wird ein planares holografisch optisches Element 101 auf einer formbaren Folie 20.3 auf der Oberfläche 20.1 des Formteils 20 positioniert und ausgerichtet. In Schritt a) ist die Oberfläche 20.1 gezeigt, auf die in Schritt b) eine formbare Folie 20.3 aufgebracht wird. Dies kann z.B. durch Laminieren erfolgen. Auch ist es möglich, die Folie 20.3 zuvor (z.B. durch einen Rahmen) aufzuspannen und die Oberfläche 20.1 des Formteils 20 dort hineinzubewegen. Dabei dehnt sich die Folie 20.3 und haftet sauber an der Oberfläche 20.1. Anschließend werden die überstehenden Kanten der Folie 20.3 abgeschnitten. In Schritt c) wird nun das holografisch optische Element 101 auf der Folie 20.3 positioniert und ausgerichtet. Dies gelingt besonders einfach, wenn die Folie 20.3 eine gute Verformbarkeit und ein leichte Klebrigkeit besitzt. In Schritt d) wird die Gießform 30 aus dem weiteren Formteil 10 mit der Oberfläche 10.1 und der Manschette 10.2 montiert, so dass eine Gießkavität 40 entsteht. In Schritt e) wird mittels des Dosiersystems 13 nun über die Öffnnung 5 das Gießmaterial 7 in die Gießkavität 40 überführt. Nach dem Härtungsschritt f) erfolgt die Entformung in Schritt g).

Figur 16 beschreibt eine weitere Aus führungs form des Verfahrens zur Herstellung eines optischen Gießkörpers 64 umfassend wenigstens ein volumenholografisch optisches Element 102 mittels einer Gießform 30 und eines Gießprozesses. Bei dieser Verfahrensvariante wird ein holografisch optisches Element 102 auf eine Oberfläche 70, die durch ein 2-Schritt Gieß- und Härtungsverfahren entsteht, positioniert und ausgerichtet. In Schritt a) wird das erste Formteil 10 aus der Manschette 10.2 und der ersten Oberfläche 10.1 zusammengesetzt und mit der ersten Oberfläche 10.1 nach unten aufgestellt. In Schritt b) wird durch das Dosiersystem 13 das Gießsystem 7 auf die erste Oberfläche 10.1 gegeben, bis eine plane Oberfläche 70 entsteht. In Schritt c) wird das Gießmaterial 7 gehärtet. Dabei ist es möglich die Härtung nur partiell durchzuführen, damit die Oberfläche 70 noch teilweise klebrig bleibt. Auch ein Durchhärten ist möglich. Bevorzugt ist eine partielle Härtung. In Schritt d) wird nun das holografisch optische Element 102 auf die Fläche 70 positioniert und ausgerichtet. In Schritt e) wird nun die Gießform 3 durch Anbringen des zweiten Formteils 20 vollständig montiert und mittels des Dosiersystems 13 weiteres Gießmaterial 7 durch die Öffnung 5 in der Manschette 10.2 in die Gießkavität 40 eingefüllt bis die Gießkavität 40 vollständig mit Gießmaterial 7 gefüllt ist. Anschließend wird in Schritt f) das Gießsystem 7 vollständig gehärtet. In Schritt g) wird der hierdurch hergestellte optische Gießkörper 64 mit dem holografisch optischen Element 102 entformt.

### Messmethoden:

### Viskositätsbestimmung:

Die Viskosität wurde mit einem Physica MCR 51 (Fa. Anton Paar) Viskosimeter bestimmt, Dazu wurde temperiert und ein Kegel eingehangen (für niedrige Viskositäten η < 10000 mPas: 25°C, 25mm (CP-25) Kegeldurchmesser und für hohe Viskositäten η > 10000 mPas 50°C, 60mm (CP-60) Kegeldurchmesser). Man gab ca. 0,5-1g Produkt auf die Platte, ließ den Kegel herunter fahren, so dass der Kegel mit Produkt vollständig benetzt war. Überstehendes Produkt wurde abgewischt. Die Scherrate (ca. 500 1/s bei niedrigen Viskositäten und ca. 100 1/s bei höheren Viskositäten) wurde von dem Gerät selbständig eingestellt. Es wurden jeweils 20 Messwerte gemessen und der Mittelwert bestimmt.

### Brechungsindexbestimmung:

Die Messung des Brechungsindex erfolgte für hochviskose und feste Produkte bei einer Wellenlänge von 589 nm indem der Brechungsindex n in Abhängigkeit von der Wellenlänge der Probe aus den Transmissions- und Reflexionsspektren erhalten wurde. Dazu wurden ca. 100 - 300 nm dicke Filme der Proben auf Quarzglasträger aus einer fünf gewichtsprozentigen Lösung in Ethylacetat aufgeschleudert. Das Transmissions- und Reflexionsspektrum dieses Schichtpaketes wurde mit einem Spektrometer der Firma STEAG ETA-Optik, CD-Measurement System ETA-RT gemessen und danach die Schichtdicke und der spektrale Verlauf von n an die gemessenen Transmissions- und Reflexionsspektren angepasst. Dies geschah mit der internen Software des Spektrometers und erforderte zusätzlich die n Daten des Quarzglassubstrates, die in einer Blindmessung vorab bestimmt wurden.

Für flüssige Produkte wurde ein Abbe-Refraktrometer zur Brechungsindexbestimmung bei 589 nm verwendet. Dabei wurden 3 Tropfen des Produktes auf das gesäuberte Meßprisma des Geräts aufgebracht, das Beleuchtungsprisma zugeklappt und innerhalb von 2 Minuten auf 20°C temperiert. Anschließend wurde im Beobachtungsfeld die Hell-Dunkel-Grenze scharf auf das Fadenkreuz des Refraktometers eingestellt. Wenn sich der eingestellte Wert nicht mehr änderte, wurde an der Skala im Gerat die Brechzahl auf vier Stellen nach dem Komma abgelesen. Es wurde eine Doppelbestimmung durchgeführt. Abweichungen bis zu 0,0002 Skalenteile waren zulässig.

### Trübungsmessung

Die Trübungsmessung erfolgte gemäß ASTM D 1003. Die Trübung stellt den prozentualen Anteil durchgelassenen Lichtes dar, der vom eingestrahlten Lichtbündel im Mittel um mehr als 2.5° abweicht. Zur Messung der Trübung wurden die holografischen Coupons vor der Messung außen gereinigt, um eine Verfälschung des Ergebnisses durch Fingerabdrücke und Schmutz auf den Gläsern zu vermeiden. Dann wurden die Coupons in ein Haze-Gard-Plus Gerät der Byk-Gardner zur Vermessung eingesetzt. Die Schichtdickenmessung des Coupons erfolgt wie unten im Abschnitt "Messung der holographischen Eigenschaften DE und Δn der holographischen Medien mittels Zweistrahlinterferenz in Transmissionsanordnung" beschrieben in der Simulation der theoretischen Braggkurve nach Kogelnik.

### Isocyanatgehalt

Die angegebenen NCO-Werte (Isocyanat-Gehalte) wurden gemäß DIN EN ISO 11909 bestimmt.

Der vollständige Umsatz von NCO-Gruppen bzw. deren Abwesenheit in einem Reaktionsgemisch wurde IR-spektroskopisch nachgewiesen. So wurde dann ein vollständiger Umsatz angenommen, wenn im IR-Spektrum des Reaktionsgemisches keine NCO-Bande (2261cm⁻¹) sichtbar war.

### Festkörpergehalt

Von einem unlackierten Dosendeckel und einer Büroklammer wurde das Tara-Gewicht ermittelt. Dann wurden ca. 1g der zu untersuchenden Probe nach der Einwaage in dem Dosendeckel mit der geeignet gebogenen Büroklammer gleichmäßig verteilt. Die Büroklammer verblieb zur Messung in der Probe. Die Einwaage wurde ermittelt, danach für 1 Stunde bei 125 °C in einen Laborofen erhitzt und anschließend die Auswaage bestimmt. Den Festkörpergehalt wurde gemäß folgender Gleichung bestimmt: Auswaage [g] * 100 / Einwaage [g] = Gew.-% Festkörper.

### Chemikalien und Substrate:

### Herstellung von Polyol 1:

In einem 1 L Kolben wurden 0.18 g Zinnoctoat, 374.8 g ε-Caprolacton und 374.8 g eines difunktionellen Polytetrahydrofuranpolyetherpolyols (Equivalentgewicht 500 g/Mol OH) vorgelegt und auf 120 °C aufgeheizt und so lange auf dieser Temperatur gehalten, bis der Festgehalt (Anteil der nicht-flüchtigen Bestandteile) bei 99.5 Gew.-% oder darüber lag. Anschließend wurde abgekühlt und das Produkt als wachsiger Feststoff erhalten.

### Herstellung des Urethanacrylats 1 (Schreibmonomer): Phosphorothioyltris(oxybenzol-4,1-diylcarbamoyloxyethan-2,1-diyl)trisacrylat

In einem 500 mL Rundkolben wurden 0.1 g 2,6-Di-tert.-butyl-4-methylphenol, 0.05 g Dibutylzinndilaurat sowie und 213.07 g einer 27 %-igen Lösung von Tris(p-isocyanatophenyl)thiophosphat in Ethylacetat (Desmodur^{®} RFE, Produkt der Bayer MaterialScience AG, Leverkusen, Deutschland) vorgelegt und auf 60 °C erwärmt. Anschließend wurden 42.37 g 2-Hydroxyethylacrylat zugetropft und die Mischung weiter auf 60 °C gehalten, bis der Isocyanatgehalt unter 0.1 % gesunken war. Danach wurde abgekühlt und das Ethylacetat im Vakuum vollständig entfernt. Das Produkt wurde als teilkristalliner Feststoff erhalten.

### Herstellung des Urethanacrylats 2 (Schreibmonomer): 2-({[3-(Methylsulfanyl)phenyl]-carbamoyl}oxy)ethylprop-2-enoat

In einem 100 mL Rundkolben wurden 0.02 g 2,6-Di-tert.-butyl-4-methylphenol, 0.01 g Desmorapid Z, 11.7 g 3-(Methylthio)phenylisocyanat [28479-1-8] vorgelegt und auf 60 °C erwärmt. Anschließend wurden 8.2 g 2-Hydroxyethylacrylat zugetropft und die Mischung weiter auf 60 °C gehalten, bis der Isocyanatgehalt unter 0.1 % gesunken war. Danach wurde abgekühlt. Das Produkt wurde als farblose Flüssigkeit erhalten.

### Herstellung des Additivs 1 Bis(2,2,3,3,4,4,5,5,6,6,7,7-dodecafluorheptyl)-(2,2,4-trimethylhexan-1,6-diyl)biscarbamat

In einem 50 mL Rundkolben wurden 0.02 g Desmorapid Z und 3.6 g 2,4,4-Trimethylhexane-1,6-diisocyanat (TMDI) vorgelegt und auf 60 °C erwärmt. Anschließend wurden 11.9 g 2,2,3,3,4,4,5,5,6,6,7,7-Dodecafluorheptan-1-ol zugetropft und die Mischung weiter auf 60 °C gehalten, bis der Isocyanatgehalt unter 0.1 % gesunken war. Danach wurde abgekühlt. Das Produkt wurde als farbloses Öl erhalten.

### Borat (Photoinitiator):

Die Herstellung des Borats erfolgte nach Beispiel 1 der europäischen Anmeldung EP 13189138.4. Es wurde eine 51,9%ige Lösung des Benzyl-dimethylhexadecylammoniumborats erhalten.

### Farbstoff 1:

Die Herstellung des Farbstoffs ist in Beispiel 9 aus der WO 2012 062655 beschrieben.

### Farbstoff 2:

Die Herstellung des Farbstoffs ist in Beispiel 15 aus der WO 2012 062655 beschrieben.

### Farbstoff 3:

Die Herstellung des Farbstoffs ist in Beispiel 14 aus der WO 2012 062655 beschrieben.

### Substrat:

Tacphan 915-GL eine 50 µm dicke Triacetatfolie der LOFO high Tech Film GMBH, DE-79576 Weil am Rhein (Deutschland).

| | |
|---|---|
| Desmodur^{®} N 3900 | Produkt der Bayer MaterialScience AG, Leverkusen, DE, Hexandiisocyanatbasiertes Polyisocyanat, Anteil an Iminooxadiazindion mindestens 30 %, NCO-Gehalt: 23.5 %. |
| Trimethylhexamethylendiisocyanat | [28679-16-5] - ABCR GmbH & Co KG, Karlsruhe, Deutschland |
| 1H,1H-7H-Perfluorheptan-1-ol | [335-99-9] - ABCR GmbH & Co KG, Karlsruhe, Deutschland |
| Desmorapid Z | Dibutylzinn-dilaurat [77-58-7], Produkt der Bayer MaterialScience AG, Leverkusen, Deutschland. |
| Fomrez UL 28 | Urethanisierungskatalysator, Handelsprodukt der Momentive Performance Chemicals, Wilton, CT, USA. |
| Natrium-bis(2-ethylhexyl)-sulfosuccinat | [45297-26-5] ist bei Aldrich Chemie, Steinheim erhältlich. |
| 4-Chlorphenylmagnesiumbromid | [873-77-8] ist als 0.9 M Lösung in THF/Toluol bei Aldrich Chemie, Steinheim erhältlich. |
| Tetrabutylammoniumbromid | [1643-19-2] ist bei ABCR GmbH & CO. KG, Karlsruhe erhältlich. |
| BYK^{®} 310 | silikonbasiertes Oberflächenadditiv der Firma BYK-Chemie GmbH, Wesel, 25%ige Lösung in Xylol |
| Ethylacetat | [141-78-6] Lösungsmittel |

### Herstellung und Charakterisierung von Testhologrammen

Testhologramme wurden wie folgt vorbereiten: die Photopolymerfolien wurden im Dunkeln auf die gewünschte Größe zurechtgeschnitten und mit Hilfe einer Gummiwalze auf eine Glasplatte der Maße 50 mm x 70 mm (3 mm Dicke) auflaminiert.

Die Herstellung von Testhologrammen erfolgt durch eine Testapparatur, die mittels grüner (532nm) Laserstrahlung Denisyuk-Reflektionshologrammen erzeugt. Die Testapparatur besteht aus einer Laserquelle, einem optischen Strahlführungssystem und einer Halterung für die Glascoupons. Die Halterung für die Glascoupons ist mit einem Winkel von 13° relativ zur Strahlachse montiert.

Die Laserquelle generierte die Strahlung, die über einen speziellen optischen Strahlengang auf ca 5cm aufgeweitet zum Glascoupon geführt wurde, der sich im optischen Kontakt zum Spiegel befand. Das holographierte Objekt war ein ca. 2cm x 2cm großer Spiegel, so dass bei der Rekonstruktion des Holograms die Wellenfront des Spiegels rekonstruiert wurde. Alle Beispiele wurden mit einem grünen 532nm Laser (Newport Corp, Irvine, CA, USA, Best.-Nr. EXLSR-532-50-CDRH) belichtet. Mittels Verschlussblende wurde der Aufzeichnungsfilm definiert für 2 Sekunden belichtet.

Anschließend wurden die Proben mit der Substratseite zur Lampe hin auf das Förderband eines UV-Strahlers gelegt und mit einer Bahngeschwindigkeit von 2,5 m/min zwei Mal belichtet. Als UV-Strahler wurde eine eisendotierte Hg-Lampe vom Typ Fusion UV type "D Bulb" No. 558434 KR 85 mit 80 W / cm² Gesamtleistungsdichte verwendet. Die Parameter entsprachen einer Dosis von 2 x 2,0 J/cm² (gemessen mit einem Light Bug des Typs ILT 490).

Diese diffraktive Reflexion lässt sich aufgrund der hohen Effizienz des Volumenhologramms mit sichtbarem Licht mit einem VIS-Spektrometer (USB 2000, Ocean Optics, Dunedin, FL, USA) in Transmission analysieren und erscheint im Transmissionsspektrum als Peak mit reduzierter Transmission. Über die Auswertung der Transmissionskurve lässt sich die Qualität des Hologramms feststellen: Die Breite des Peaks wurde als "Full widtli at half maximum" (FWHM) in Nanometern (nm) bestimmt, die Tiefe des Peaks (Tmin) wurde als 100% - Tmin in Prozent angegeben, der Bereich mit niedrigster Transmission gibt die Wellenlänge (nm) höchster Beugungseffizienz an.

### Beispiele

### Beispiel 1

Ein Testhologramm aus holografischen Aufzeichnungsfilm wurde in eine Öffnung in einer runden Kunststoff Manschette positioniert und ausgerichtet (siehe auch Figur 4g). Zuerst wurde die Gießform montiert, indem zwei Glaslinsen (85mm Durchmesser, Innenradius 88 mm, Shamir Insight, Inc.) mit der Kunststoff Manschette zusammengeklemmt wurden, sodass eine Gießkavität entstand.

Das Gießsystem bestand aus einer Mischung 1: 80g Desmodur I (Isophorondiisocyanat, Bayer Materialscience AG, Leverkusen, Deutschland), 20g Desmodur N 3200 (ein Biuret haltiges Polyisocyanat des Hexamethylendiisocyanats, Bayer Materialscience AG, Leverkusen, Deutschland) und 3,76g Formtrennmittel Zelec UN (Stepan Company, USA), das gemischt und über Nacht stehengelassen wurde. Mischung 2 wurden aus 73,9 g Desmophen 4011 T (Bayer Materialscience AG, Leverkusen, Deutschland) und 0,04g Katalysator (4,12-Dibutyl-2,6,10,14-tetramethyl-1,7,9,15-tetraoxa-4,12-diaza-8-stannaspirol[7.7]pentadecan) zusammengemischt und ebenfalls über Nacht stehengelassen. Danach wurde die Mischung 1 in einem Kolben überführt und für 10 Minuten bei 10 mbar evakuiert. Mischung 2 wurde dann in den Kolben dazugegeben, und die finale Mischung 3 wurde erneut gerührt und entgast. Mischung 3 wurde dann durch ein 5 µm Filter filtriert und in eine Spritze gefüllt und daraufhin wurde die Gießform vollständig gefüllt.

Die gefüllte Gießform wurde im Trockenschrank mit folgenden Temperaturprofil gehärtet: 4 Stunden bei 20°C; in einer Zeit von 13 Stunden auf 100°C linear aufgeheizt; 2 Stunden bei 100°C getempert; 2 Stunden bei 120°C getempert. Schließlich, wurde die Gießform auf Raumtemperatur abgekühlt und nach vollständigem Abkühlen wurden zunächst die Manschette und dann die zwei Glaskörper manuell entfernt.

### Beispiel 2

Beispiel 2 wurde genauso wie Beispiel 1 hergestellt und charakterisiert, wobei das Gießsystem keinen Katalysator enthielt.

### Beispiel 3

Beispiel 3 wurde genauso wie Beispiel 1 hergestellt und charakterisiert, wobei das Gießsystem 0,04g des Katalysators 2,4,6,10,12,14-Hexamethyl-1,7,9,15-tetraoxa-4,12-diaza-8-stannaspirol[7.7]pentadecan enthielt.

### Beispiel 4

Beispiel 4 wurde genauso wie Beispiel 1 hergestellt und charakterisiert, wobei das Testhologramm auf die Ränder der konkaven Seite der Oberfläche der Glasform positioniert und geklebt wurde (siehe auch Figur 3).

In Tabelle 1 sind die spektralen Eigenschaften der eingebetteten Hologramme jeweils vor und nach dem Eingießen gezeigt.

**Tabelle 1: Angabe der Zentralwellenlänge der Denisyuk-Hologramme vor und nach dem Eingießen.**

| | Zentralwellenlänge [nm] |
|---|---|
| Beispiel 1 - vor Einbetten | 530 |
| Beispiel 1 - in ausgehärteter Glaslinse | 566 |
| Beispiel 2 - vor Einbetten | 529 |
| Beispiel 2 - in ausgehärteter Glaslinse | 563 |
| Beispiel 3 - vor Einbetten | 531 |
| Beispiel 3 - in ausgehärteter Glaslinse | 550 |
| Beispiel 4 - vor Einbetten | 530 |
| Beispiel 4 - in ausgehärteter Glaslinse | 539 |

## Patentansprüche

1. Verfahren zur Herstellung eines optischen Gießkörpers umfassend wenigstens ein volumenholografisch optisches Element mittels eines Gießprozesses, wobei das Verfahren folgende Schritte umfasst:
- Bereitstellen einer Gießform, umfassend ein erstes Formteil mit einer ebenen, sphärischen, asphärischen oder freiförmigen ersten Oberfläche und ein zweites Formteil mit einer ebenen, sphärischen, asphärischen oder freiförmigen zweiten Oberfläche, wobei das erste Formteil mit dem zweiten Formteil unter Ausbildung der Gießform verbindbar ist,
- Bereitstellen wenigstens eines holografisch optischen Elements,
- Positionieren und Ausrichten des wenigstens einen holografisch optischen Elements an dem ersten Formteil oder/und an dem zweiten Formteil,
- Zusammenführung des ersten und des zweiten Formteils unter Ausbildung der Gießform,
- Einführen von Gießmaterial in einem oder mehreren Gießschritten, wobei das Gießmaterials eine Viskosität bei 25°C von kleiner 5.000 mPas besitzt,
- Aushärten des Gießmaterials,
- Entfernen des ausgehärtenden Gießmaterials umfassend das wenigstens eine holografisch optischen Element aus der Gießform, wobei das wenigstens eine holografisch optischen Element wenigstens teilweise vom Gießmaterial umgeben ist.

2. Verfahren nach Anspruch 1,
**dadurch gekennzeichnet, dass**
das erste und/oder das zweite Formteil wenigstens eine Manschette zur Verbindung des einen Formteils mit dem anderen Formteil umfasst.

3. Verfahren nach Anspruch 2,
**dadurch gekennzeichnet, dass**
das wenigstens eine holografisch optische Element ausschließlich oder zusätzlich an der wenigstens einen Manschette positioniert und ausgerichtet wird.

4. Verfahren nach einem der Ansprüche 1 bis 3,
**dadurch gekennzeichnet, dass**
das wenigstens eine holografisch optische Element an der ersten Oberfläche des ersten Formteils und/oder an der zweiten Oberfläche des zweiten Formteils positioniert und ausgerichtet wird.

5. Verfahren nach Anspruch 4,
**dadurch gekennzeichnet, dass**
das wenigstens eine holografisch optische Element über einen als Fixiermittel fungierenden Materialtropfen an der ersten Oberfläche des ersten Formteils und/oder an der zweiten Oberfläche des zweiten Formteils positioniert und ausgerichtet wird, wobei der Brechnungsindex des Materialtropfens von dem des Gießmaterials nicht mehr als 0,01, bevorzugt 0,002 abweicht.

6. Verfahren nach einem der Ansprüche 1 bis 5,
**dadurch gekennzeichnet, dass**
das wenigstens eine holografisch optische Element auf wenigstens einem Folienabschnitt positioniert und ausgerichtet wird, wobei der wenigstens eine Folienabschnitt auf der ersten Oberfläche des ersten Formteils und/oder auf der zweiten Oberfläche des zweiten Formteils angeordnet ist und diesen zumindest abschnittsweise bedeckt.

7. Verfahren nach Anspruch 1 bis 6,
**dadurch gekennzeichnet, dass**
das wenigstens eine holografische optische Element zumindest abschnittsweise mit ei nem Folienabschnitt verbunden ist, wobei der Folienabschnitt zusätzlich eine weitere optische Funktion bereitstellt, insbesondere eine Polarisatorfunktion, eine UV-Absorption, eine Designfunktion, eine markierende Funktion, eine färbende Funktion eine photochrome Funktion, eine mechanisch stützende Funktion oder eine Kombination aus den vorgenannten Funktionen.

8. Verfahren nach einem der Ansprüche 1 bis 7,
wobei das erste und/oder das zweite Formteil zumindest teilweise mit Gießmaterial gefüllt wird und das Gießmaterial zumindest teilweise ausgehärtet wird, wobei sodann das wenigstens eine holografisch optische Element auf der gebildeten Oberfläche des zumindest teilweise ausgehärteten Gießmaterials positioniert und ausgerichtet wird, wobei anschließend das erste und das zweite Formteil unter Ausbildung der Gießform zusammengeführt werden, sodann die Gießform vollständig mit Gießmaterial gefüllt wird und daran anschließend das gesamte Gießmaterial ausgehärtet wird.

9. Verfahren nach einem der Ansprüche 1 bis 8,
**dadurch gekennzeichnet, dass**
das wenigstens eine holografische Element eben ausgebildet ist und mit seiner Flächennormalen in einem Winkel zur optischen Achse des Gießkörper von 0° bis 90°, vorzugsweise 0° bis 60° ausgerichtet und positioniert ist.

10. Verfahren nach einem der Ansprüche 1 bis 9,
**dadurch gekennzeichnet, dass**
das wenigstens eine holografisch optische Element in einen optischen Schichtaufbau integriert ist, wobei der Schichtaufbau derart gestaltet ist, dass Licht in den Schichtaufbau eingekoppelbar ist, entlang der Erstreckung der Schichten des Schichtaufbaus propagieren kann, über das wenigstens eine holografisch optische Element in dem um gebenden optischen Gießkörper ausgestrahlt werden kann und von dort aus aus dem optischen Gießkörper austreten kann.

11. Verfahren nach einem der Ansprüche 1 bis 10,
**dadurch gekennzeichnet, dass**
das wenigstens eine holografische optische Element durch ein Photopolymermaterial gebildet wird, wobei das Photopolymermaterial einen Binder, wenigstens ein Schreibmonomer und ein wenigstens ein Photoinitiatorsystem umfasst, wobei der Binder bevorzugt einen vernetzten Binder enthält, wobei das Photopolymermaterial besonders bevorzugt ferner ein Kontrastagenz der Struktur (II) umfasst, wobei n≥1 und n≤8 ist und R1, R2, R3 unabhängig voneinander Wasserstoff, lineare, verzweigte, zyklische oder heterozyklische unsubstituierte oder gegebenenfalls auch mit Heteroatomen substituierte organische Reste sind, wobei mindestens einer der Reste R1, R2, R3 mit wenigstens einem Fluoratom substituiert ist.

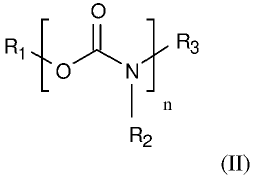

12. Verfahren nach einem der Ansprüche 1 bis 11,
**dadurch gekennzeichnet, dass**
das Gießmaterial beim Einführen eine Viskosität von kleiner kleiner 500 mPas und besonders bevorzugt kleiner 100 mPas bei 25°C aufweist.

13. Verfahren nach einem der Ansprüche 1 bis 12,
**dadurch gekennzeichnet, dass**
das Gießmaterial eines oder mehrere Monomere und/oder Oligomere mit mindestens einer funktionellen Gruppe umfasst, wobei die mindestens eine funktionelle Gruppe ausgewählt ist aus: Acryl-, Methacryl-, Vinyl-, Allyl-, Isocyanat-, Isothiocyanat-, Alkohol, Säure, Oxiran, Thiiran, Thiol und Amin.

14. Verwendung eines optischen Gießkörpers hergestellt nach einem Verfahren nach einem der Ansprüche 1 bis 13 in Brillen, wie z.B. Korrekturbrillen, Bifocal-, Trifokal- und Gleitsichtbrillen, Korrekturbrillen zur Bildschirmarbeit und zum Autofahren, Son nenbrillen, Brillen mit Polarisationsfunktion, Schutzbrillen, Funktionsbrillen, Brillen mit eingebauter elektronischer Anzeige für augmented reality oder Datenbrillen, Automobilfrontscheinwerfer oder Rückleuchten, Mikroskope, Scheinwerfer, Taschenlampen, Fotoobjektive für Kameras und Smartphones, Projektionsoptiken in (elektronischen) Projektoren, Sekundäroptiken in lichtemittierenden Dioden und Lasern, LED-Lampen, Leuchten und Korrekturoptiken für elektronische Bildsensoren.

## Claims

1. Process for producing an optical casting comprising at least one volume-holographic optical element by means of a casting operation, the process comprising the following steps:
- providing a casting mould comprising a first mould section having a flat, spherical, aspherical or free-form first surface and a second mould section having a flat, spherical, aspherical or free-form second surface, the first mould section being connectable to the second mould section to form the casting mould,
- providing at least one holographic optical element,
- positioning and aligning the at least one holographic optical element with respect to the first mould section or/and with respect to the second mould section,
- combining the first and second mould sections to form the casting mould,
- introducing casting material in one or more casting steps, the casting material having a viscosity at 25°C of less than 5000 mPas,
- curing the casting material,
- removing the cured casting material comprising the at least one holographic optical element from the casting mould, the at least one holographic optical element being at least partly surrounded by the casting material.

2. Process according to Claim 1,
**characterized in that**
the first and/or second mould section comprises at least one sleeve for connection of one mould section to the other mould section.

3. Process according to Claim 2,
**characterized in that**
the at least one holographic optical element is positioned and aligned exclusively or additionally with respect to the at least one sleeve.

4. Process according to any of Claims 1 to 3,
**characterized in that**
the at least one holographic optical element is positioned and aligned with respect to the first surface of the first mould section and/or with respect to the second surface of the second mould section.

5. Process according to Claim 4,
**characterized in that**
the at least one holographic optical element is positioned and aligned with respect to the first surface of the first mould section and/or with respect to the second surface of the second mould section by means of a material droplet which functions as fixing agent, the refractive index of the material droplet differing from that of the casting material by not more than 0.01, preferably 0.002.

6. Process according to any of Claims 1 to 5,
**characterized in that**
the at least one holographic optical element is positioned and aligned on at least one film section, the at least one film section being disposed on the first surface of the first mould section and/or on the second surface of the second mould section and covering at least sections thereof.

7. Process according to Claim 1 to 6,
**characterized in that**
the at least one holographic optical element is connected at least in sections to a film section, the film section additionally providing a further optical function, especially a polarizer function, a UV absorption, a design function, a labelling function, a colouring function, a photochromic function, a mechanically supporting function or a combination of the aforementioned functions.

8. Process according to any of Claims 1 to 7,
wherein the first and/or second mould section is at
least partly filled with casting material and the casting material is at least partly cured, and then the at least one holographic optical element is positioned and aligned on the formed surface of the at least partly cured casting material, and then the first and second mould sections are combined to form the casting mould, then the casting mould is completely filled with casting material and the entire casting material is subsequently cured.

9. Process according to any of Claims 1 to 8,
**characterized in that**
the at least one holographic element is flat and is aligned and positioned with its surface normal at an angle to the optical axis of the casting of 0° to 90°, preferably 0° to 60°.

10. Process according to any of Claims 1 to 9,
**characterized in that**
the at least one holographic optical element is integrated into an optical layer structure, the layer structure being configured such that light can be input into the layer structure, can propagate along the extent of the layers of the layer structure, can be emitted via the at least one holographic optical element in the surrounding optical casting and thence can leave the optical casting.

11. Process according to any of Claims 1 to 10,
**characterized in that**
the at least one holographic optical element is formed by a photopolymer material, the photopolymer material comprising a binder, at least one writing monomer and at least one photoinitiator system, the binder preferably comprising a crosslinked binder, the photopolymer material more preferably further comprising a contrast agent of the structure (II) where n ≥ 1 and n ≤ 8 and R1, R2, R3 are each independently hydrogen, linear, branched, cyclic or heterocyclic unsubstituted or else optionally heteroatom-substituted organic radicals, where at least one of the R1, R2, R3 radicals is substituted by at least one fluorine atom.

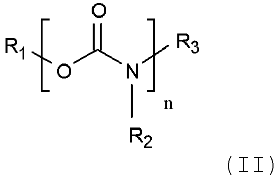

12. Process according to any of Claims 1 to 11,
**characterized in that**
the casting material on introduction has a viscosity of less than 500 mPas and more preferably less than 100 mPas at 25°C.

13. Process according to any of Claims 1 to 12,
**characterized in that**
the casting material comprises one or more monomers and/or oligomers having at least one functional group, the at least one functional group being selected from: acryloyl, methacryloyl, vinyl, allyl, isocyanate, isothiocyanate, alcohol, acid, oxirane, thiirane, thiol and amine.

14. Use of an optical casting produced by a process according to any of Claims 1 to 13 in pairs of glasses, for example corrective glasses, bifocal glasses, trifocal glasses and varifocal glasses, corrective glasses for display screen work and for driving, sunglasses, glasses with a polarization function, protective glasses, functional glasses, glasses with an installed electronic display for augmented reality or data glasses, automobile front headlamps or reversing lights, microscopes, floodlights, pocket torches, photographic lenses for cameras and smartphones, projection optics in (electronic) projectors, secondary optics in light-emitting diodes and lasers, LED lamps, lights and corrective optics for electronic image sensors.

## Revendications

1. Procédé pour la fabrication d'un corps moulé optique comprenant au moins un élément optique holographique volumique au moyen d'un processus de coulée, le procédé comprenant les étapes suivantes :
- mise à disposition d'un moule de coulée, comprenant une première partie de moule pourvue d'une première surface plane, sphérique, asphérique ou de forme libre et une deuxième partie de moule pourvue d'une deuxième surface plane, sphérique, asphérique ou de forme libre, la première partie de moule pouvant être reliée à la deuxième partie de moule avec formation du moule de coulée,
- mise à disposition d'au moins un élément optique holographique,
- positionnement et orientation dudit au moins un élément optique holographique au niveau de la première partie de moule et/ou de la deuxième partie de moule,
- rapprochement de la première et de la deuxième partie de moule avec formation du moule de coulée,
- introduction du matériau de coulée en une ou plusieurs étapes de coulée, le matériau de coulée présentant une viscosité à 25°C inférieure à 5000 mPa.s,
- durcissement du matériau de coulée,
- retrait du matériau de coulée durci comprenant ledit au moins un élément optique holographique à partir du moule de coulée, ledit au moins un élément optique holographique étant au moins partiellement entouré du matériau de coulée.

2. Procédé selon la revendication 1, **caractérisé en ce que** la première et/ou la deuxième partie de moule comprend au moins une manchette destinée à relier l'une partie de moule à l'autre partie de moule.

3. Procédé selon la revendication 2, **caractérisé en ce que** ledit au moins un élément optique holographique est positionné et orienté exclusivement ou en plus au niveau de ladite au moins une manchette.

4. Procédé selon l'une quelconque des revendications 1 à 3, **caractérisé en ce que** ledit au moins un élément optique holographique est positionné et orienté au niveau de la première surface de la première partie de moule et/ou au niveau de la deuxième surface de la deuxième partie de moule.

5. Procédé selon la revendication 4, **caractérisé en ce que** ledit au moins un élément optique holographique est positionné et orienté par l'intermédiaire d'une goutte de matériau fonctionnant comme agent de fixation au niveau de la première surface de la première partie de moule et/ou au niveau de la deuxième surface de la deuxième partie de moule, l'indice de réfraction de la goutte de matériau ne s'écartant pas de plus de 0,01, de préférence pas de plus de 0,002 de celui du matériau de coulée.

6. Procédé selon l'une quelconque des revendications 1 à 5, **caractérisé en ce que** ledit au moins un élément optique holographique est positionné et orienté sur au moins une section de feuille, ladite au moins une section de feuille étant agencée sur la première surface de la première partie de moule et/ou sur la deuxième surface de la deuxième partie de moule et recouvrant celle(s)-ci au moins partiellement.

7. Procédé selon la revendication 1 à 6, **caractérisé en ce que** ledit au moins un élément optique holographique est relié au moins en partie à une section de feuille, la section de feuille mettant à disposition en plus une autre fonction optique, en particulier une fonction de polarisant, une absorption d'UV, une fonction de design, une fonction de marquage, une fonction de coloration, une fonction photochrome, une fonction de support mécanique ou une combinaison des fonctions susmentionnées.

8. Procédé selon l'une quelconque des revendications 1 à 7, la première et/ou la deuxième partie de moule étant remplie(s) au moins partiellement par le matériau de coulée et le matériau de coulée étant au moins partiellement durci, ledit au moins un élément optique holographique étant ensuite positionné ou orienté sur la surface formée dudit matériau de coulée au moins partiellement durci, la première et la deuxième partie de moule étant ensuite rapprochées avec formation du moule de coulée, le moule de coulée étant ensuite complètement rempli de matériau de coulée et la totalité du matériau de coulée étant ensuite durcie.

9. Procédé selon l'une quelconque des revendications 1 à 8, **caractérisé en ce que** ledit au moins un élément holographique est conçu de manière plane et est orienté et positionné avec sa normale à la surface sous un angle par rapport à l'axe optique du corps moulé de 0° à 90°, de préférence de 0° à 60°.

10. Procédé selon l'une quelconque des revendications 1 à 9, **caractérisé en ce que** ledit au moins un élément optique holographique est intégré dans une structure stratifiée optique, la structure stratifiée étant conçue de manière telle que de la lumière peut être couplée dans la structure stratifiée, se propager le long de l'étendue des couches de la structure stratifiée, être émise par l'intermédiaire dudit au moins un élément optique holographique dans le corps moulé optique qui l'entoure et sortir à partir de là du corps moulé optique.

11. Procédé selon l'une quelconque des revendications 1 à 10, **caractérisé en ce que** ledit au moins un élément optique holographique est formé par un matériau de photopolymère, le matériau de photopolymère comprenant un liant, au moins un monomère d'enregistrement et au moins un système de photo-initiateur, le liant contenant de préférence un liant réticulé, le matériau de photopolymère comprenant en outre de manière particulièrement préférée un agent de contraste de structure (II), dans laquelle n ≥ 1 et n ≤ 8 et R₁, R₂, R₃ représentent, indépendamment les uns des autres, hydrogène, des radicaux organiques linéaires, ramifiés, cycliques ou hétérocycliques, non substitués ou le cas échéant également substitués par des hétéroatomes, au moins l'un des radicaux R₁, R₂, R₃ étant substitué par au moins un atome de fluor.

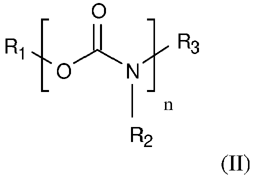

12. Procédé selon l'une quelconque des revendications 1 à 11, **caractérisé en ce que** le matériau de coulée présente, lors de l'introduction, une viscosité inférieure à 500 mPa.s et de manière particulièrement préférée inférieure à 100 mPa.s à 25°C.

13. Procédé selon l'une quelconque des revendications 1 à 12, **caractérisé en ce que** le matériau de coulée comprend un ou plusieurs monomères et/ou oligomères présentant au moins un groupe fonctionnel, ledit au moins un groupe fonctionnel étant choisi parmi : acryle, méthacryle, vinyle, allyle, isocyanate, isothiocyanate, alcool, acide, oxirane, thiirane, thiol et amine.

14. Utilisation d'un corps moulé optique préparé selon un procédé selon l'une quelconque des revendications 1 à 13 dans les lunettes, comme par exemple les lunettes de correction, les lunettes bifocales, trifocales et les lunettes progressives, les lunettes de correction pour le travail sur écran et la conduite automobile, les lunettes solaires, les lunettes pourvues d'une fonction de polarisation, les lunettes de protection, les lunettes fonctionnelles, les lunettes pourvues d'un affichage électronique incorporé pour la réalité augmentée ou les lunettes de données, les phares avant et les feux arrière d'automobiles, les microscopes, les spots, les lampes de poche, les objectifs photo pour caméras et téléphones intelligents, les optiques de projection dans les projecteurs (électroniques), les optiques secondaires dans les diodes électroluminescentes et les lasers, les lampes de type DEL, les luminaires et les optiques de correction pour les capteurs électroniques d'images.
